(19) Europäisches Patentamt
European Patent Office
Office européen des brevets

(11) **EP 3 129 265 B1**

(12) **EUROPÄISCHE PATENTSCHRIFT**

(45) Veröffentlichungstag und Bekanntmachung des Hinweises auf die Patenterteilung:
**04.04.2018 Patentblatt 2018/14**

(51) Int Cl.:
***B60T 13/68*** *(2006.01)*     ***B60T 13/38*** *(2006.01)*
***B60T 15/02*** *(2006.01)*     ***B60T 15/18*** *(2006.01)*

(21) Anmeldenummer: **14750309.8**

(22) Anmeldetag: **01.08.2014**

(86) Internationale Anmeldenummer:
**PCT/EP2014/002128**

(87) Internationale Veröffentlichungsnummer:
**WO 2015/154788 (15.10.2015 Gazette 2015/41)**

(54) **ELEKTROPNEUMATISCHE BREMSSTEUEREINRICHTUNG ZUR STEUERUNG EINER FEDERSPEICHERBREMSE**

ELECTROPNEUMATIC BRAKE CONTROLLER FOR CONTROLLING A SPRING BRAKE

DISPOSITIF DE COMMANDE ÉLECTROMAGNÉTIQUE DE FREIN DESTINÉ À COMMANDER UN FREIN À RESSORT ACCUMULATEUR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **09.04.2014 DE 102014005169**

(43) Veröffentlichungstag der Anmeldung:
**15.02.2017 Patentblatt 2017/07**

(73) Patentinhaber: **KNORR-BREMSE Systeme für Nutzfahrzeuge GmbH**
**80809 München (DE)**

(72) Erfinder:
• HECKER, Falk
  71706 Markgröningen (DE)
• RÖTHER, Friedbert
  74389 Cleebronn (DE)
• HERGES, Michael
  80935 München (DE)
• HEEG, Sarah
  71701 Schwieberdingen (DE)

(56) Entgegenhaltungen:
DE-A1-102007 061 908     DE-A1-102011 101 438
DE-B3-102009 059 816

**Beschreibung**

Die Erfindung betrifft eine elektropneumatische Bremssteuereinrichtung zur Steuerung einer wenigstens einen Federspeicherbremszylinder beinhaltenden Feststellbremse, mit einem Anschluss für den wenigstens einen Federspeicherbremszylinder, einer mittels einer elektronischen Steuereinrichtung steuerbaren Magnetventileinrichtung, einem Relaisventil, dessen pneumatischer Steuereingang einerseits mit der ersten Magnetventileinrichtung und andererseits mit dem Anschluss für den wenigstens einen Federspeicherbremszylinder und dessen Arbeitsausgang mit dem Anschluss für den wenigstens einen Federspeicherbremszylinder verbunden ist, einem mit der elektronischen Steuereinrichtung verbundenen elektrischen Feststellbremssignalanschluss für einen elektrischen Feststellbremssignalgeber, über welchen Feststellbremssignale in die Steuereinrichtung eingesteuert werden und einem über ein Rückschlagventil abgesicherten Vorratsanschluss für wenigstens einen Druckluftvorrat, welcher einerseits mit der ersten Magnetventileinrichtung und andererseits mit einem Vorratseingang des Relaisventils verbunden ist, gemäß dem Oberbegriff von Anspruch 1.

Bei Nutzfahrzeugen einschließlich Zugfahrzeug-Anhängerkombinationen sowie Schienenfahrzeugen sind Parkbremsen (auch Feststellbremsen genannt) mit Federspeicherbremszylindern ausgestattet, die in Lösestellung einen Federkompressionsraum mit Druckluft beaufschlagen und dadurch die Feder gespannt halten, während zum Bremsen der Federkompressionsraum entlüftet, d.h. mit Atmosphärendruck verbunden wird, so dass der Bremszylinder unter Wirkung der Feder eine Bremskraft erzeugt.

Es sind sowohl rein pneumatisch betriebene Parkbremsen bekannt, die mit einem vom Fahrer zu betätigenden bistabilen Parkbremsventil betrieben werden als auch elektro-pneumatische Anlagen mit einem bistabilen elektro-mechanischem Ventil, beispielsweise einem pneumatischen Relaisventil, das durch ein elektromechanisches, bistabiles Magnetventil gesteuert wird. Beide Ventilstellungen für "Parkbremse" und "Lösen" müssen dabei "stabil" sein, d. h. ohne Einwirkung einer Person in der jeweils gewählten Stellung bleiben. Bistabile Ventile sind jedoch in der Praxis störanfällig, was dazu führt, redundante Systeme zu realisieren, was zusätzlichen Aufwand bedingt.

Beim Stand der Technik wird die Bistabilität daher entweder rein pneumatisch mit nachgeschalteten Relaisventilen und mehreren Betätigungs- und Regelkolben beispielsweise nach DE 10 2009 016 983 A1 oder DE 10 247 812 C1 oder über bistabile Magnetventile mit nachgeschaltetem Relaisventil sichergestellt, wie in DE10 2006 055 570 B4 beschrieben wird.

Weiterhin ist aus gattungsgemäßen DE 10 2007 061 908 B4 bekannt, die Bistabilität durch ein rückgekoppeltes Relaisventil zu realisieren, wobei die Rückkopplung durch ein 3/2-Magnetventil realisiert wird, das unbestromt den Ausgang des Relaisventils mit dessen Steuerkammer verbindet und bestromt die Steuerkammer des Relaisventils von dessen Ausgang trennt und statt dessen mit dem Ausgang eines zweiten 3/2-Magnetventils verbindet, dass diesen Ausgang entweder mit Vorrat oder mit Atmosphäre verbinden kann. Diese Methode hat allerdings den Nachteil, dass zwei teure 3/2-Magnetventile benutzt werden und dass der Druck mit dem zweiten 3/2-Magnetventil ohne permanenten Luftverlust nur zwischen Vorrat und Atmosphäre umschaltbar, aber nicht auf einen Zwischenwert eingeregelt werden kann.

Der Erfindung liegt demzufolge die Aufgabe zugrunde, eine elektropneumatische Bremssteuereinrichtung der eingangs erwähnten Art derart weiter zu bilden, dass die an Feststellbremsen von schweren Nutzfahrzeugen gestellten Grundanforderungen wie Einlegen und Lösen der Feststellbremse mit bistabilem Verhalten, Regelbarkeit des Bremsdrucks für Hilfsbremse etc. möglichst kostengünstig realisiert werden.

Diese Aufgabe wird erfindungsgemäß durch die Merkmale von Anspruch 1 gelöst.

Offenbarung der Erfindung

Die Erfindung schlägt vor, dass die erste Magnetventileinrichtung durch drei 2/2-Wegemagnetventile mit jeweils einer Sperrstellung und einer Durchlassstellung gebildet wird, wobei ein erstes 2/2-Wegemagnetventil als Einlassventil zwischen den Steuereingang des Relaisventils und den Vorratsanschluss und ein zweites 2/2-Wegemagnetventil zwischen den Steuereingang des Relaisventils und eine Drucksenke und ein drittes 2/2-Wegemagnetventil zwischen den Arbeitsausgang und den Steuereingang des Relaisventils geschaltet ist.

Der grundsätzliche Erfindungsgedanke besteht also darin, dass Bistabilität zwar ähnlich wie bei DE10 2007 061 908 B4 durch Rückkopplung eines Relaisventils dargestellt wird. Im Unterschied dazu wird aber das erste 3/2-Magnetventil durch zwei stromlos geschlossene 2/2- Magnetventile ersetzt. Dadurch ergibt sich eine 3/3-Funktion, bei der sich im unbestromten Zustand beispielsweise beide 2/2-Magnetventile in ihrer Sperrstellung befinden und damit die Steuerkammer des Relaisventils sowohl gegenüber dem Druckluftvorrat als auch gegen Atmosphäre abgesperrt ist. Zur Rückkopplung wird ein drittes 2/2-Magnetventil benutzt, das stromlos in Durchlassstellung geschaltet ist.

Da diese Konstruktion ähnlich einer EBS-Druckregelventileinrichtung ist, können hier wie dort die gleichen Magnetventile eingesetzt werden und beiden Einrichtungen auf der gleichen Fertigungslinie und zumindest teilweise mit gleichen Gusswerkzeugen gefertigt werden, was Kosteneinsparungen mit sich bringt. Gegenüber Lösungen, bei denen zur Darstellung des bistabilen Verhaltens zusätzlich zum Relaisventil noch andere Ventile nötig sind, benötigt die Erfindung weniger Teile. Gegenüber Lösungen mit teuren bistabilen Magnetventilen, deren Anfälligkeit gegen hohe Beschleunigungen (z.B. Hammerschlag auf Rahmen in der Nähe des Magnetventils) relativ hoch, deren Ausfallverhalten nur sehr schwer darstellbar und deren Lebensdauer begrenzt ist, hat die Erfindung den Vorteil, dass diese Nachteile weitgehend vermieden werden.

Insgesamt ergeben sich Vorteile im Hinblick auf einen einfachen und kostengünstigen Aufbau, einen geringen Bauraumbedarf sowie eine robuste, bewährte Technik. Weiterhin erlaubt die Erfindung eine Verwendung von Baukastenkomponenten wie 2/2-Magnetventile und Relaisventile.

Durch die in den Unteransprüchen aufgeführten Maßnahmen sind vorteilhafte Weiterbildungen und Verbesserungen der in Anspruch 1 angegebenen Erfindung möglich.

Besonders bevorzugt besitzen das erste 2/2-Wegemagnetventil und das zweite 2/2-Wegemagnetventil jeweils eine stromlose Sperrstellung und eine bestromte Durchlassstellung und das dritte 2/2-Wegemagnetventil eine stromlose Durchlassstellung und eine bestromte Sperrstellung. Dann ist bei einem Ausfall der elektrischen Energieversorgung der Steuereingang des Relaisventils sowohl vom Vorratsanschluss wie auch von der Drucksenke abgekoppelt, so dass keine Steuerdruckluft vom Vorratsanschluss zum Relaisventil gelangen oder von diesem über die Drucksenke entweichen kann. Über das dann in Durchlassstellung befindliche dritte 2/2-Wegemagnetventil entsteht ein Rückkopplungskreis, in dem der Druck am Anschluss für den wenigstens einen Federspeicherbremszylinder in den Steuereingang des Relaisventils rückgekoppelt wird, wodurch der zuletzt eingenommene Zustand des wenigstens einen Federspeicherbremszylinders, beispielsweise dessen Zuspannstellung stabil verriegelt wird.

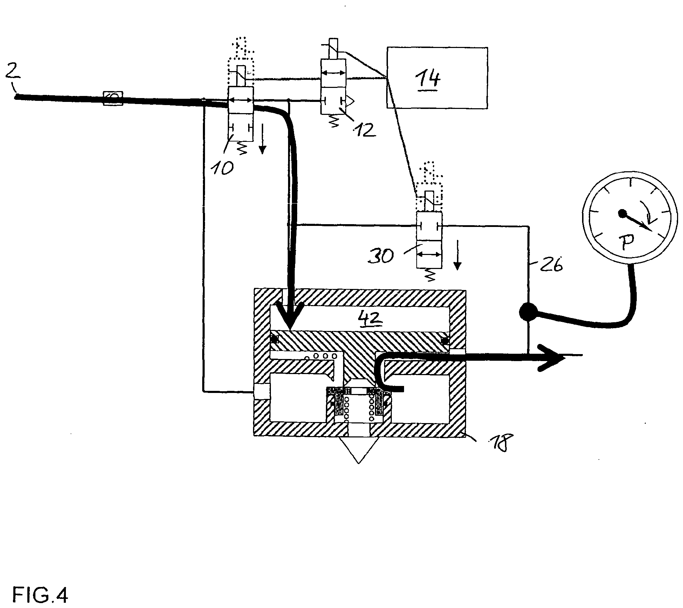

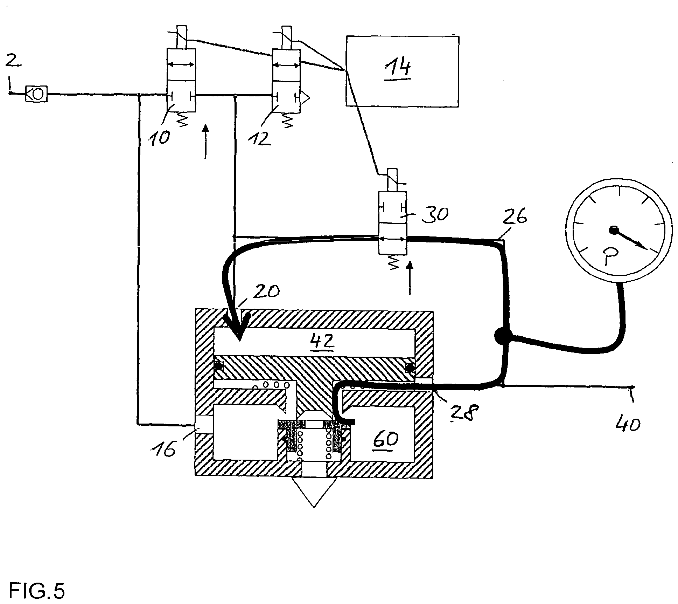

Gemäß einer Weiterbildung nach den Figuren 4 und 5 ist vorgesehen, dass bei einem Einsteuern eines einen Zustand "Fahren" repräsentierenden Feststellbremssignals in den Feststellbremssignalanschluss die elektronische Steuereinrichtung das zweite 2/2-Wegemagnetventil in Sperrstellung und zunächst das erste 2/2-Wegemagnetventil in Durchlassstellung und das dritte 2/2-Wegemagnetventil in Sperrstellung gesteuert. Beispielsweise durch Bestromen werden daher zunächst über einen bestimmten Zeitraum das erste 2/2-Wegemagnetventil in Durchlassstellung und das dritte 2/2-Wegemagnetventil in Sperrstellung geschaltet, während das das zweite 2/2-Wegemagnetventil in Sperrstellung verbleibt. Nach Ablauf der bestimmten Zeitdauer, welche notwendig ist, damit der Druck am Anschluss für den wenigstens einen Federspeicherbremszylinder den vollen Lösedruck des Federspeicherbremszylinders erreicht hat, werden dann das erste 2/2-Wegemagnetventil in Sperrstellung und das dritte 2/2-Wegemagnetventil in Durchlassstellung gesteuert, damit der volle Lösedruck an dem Anschluss für den wenigstens einen Federspeicherbremszylinder "eingesperrt" wird.

Bei einem Einsteuern eines einen Zustand "Feststellbremse mit bestimmtem Bremsdruckwert betätigen" repräsentierenden Feststellbremssignals in den Feststellbremssignalanschluss schaltet die elektronische Steuereinrichtung bevorzugt das dritte 2/2-Wegemagnetventil in Sperrstellung und abhängig von dem Bremsdruckwert das erste 2/2-Wegemagnetventil und/oder das zweite 2/2-Wegemagnetventil in Sperrstellung oder in Durchlassstellung. Die ist insbesondere im Rahmen einer Hilfs- oder Notbremsung der Fall, in welchem die Feststellbremse die Betriebsbremse ersetzen oder sie unterstützen muss.

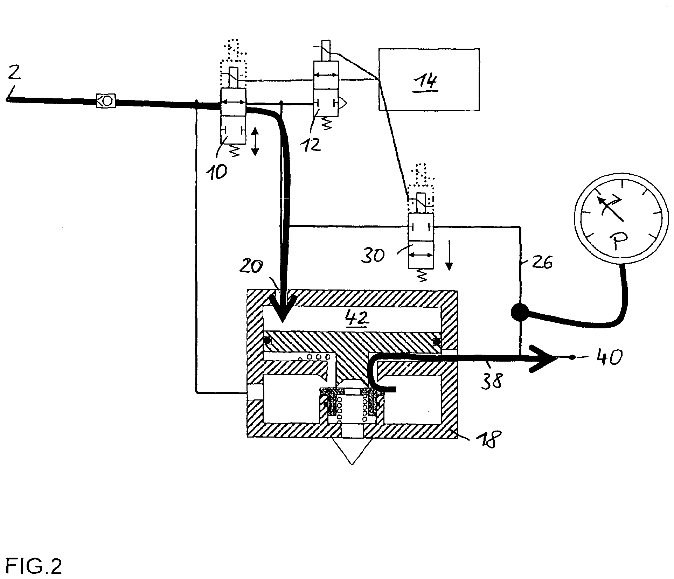

Für eine Drucksteigerung an dem Anschluss für den wenigstens einen Federspeicherbremszylinder werden beispielsweise gemäß Fig.2 das erste 2/2-Wegemagnetventil in Durchlassstellung und das dritte 2/2-Wegemagnetventil in Sperrstellung gesteuert, so dass bei über das dritte 2/2-Wegemagnetventil gesperrtem Rückkopplungskreis der Druck am Steuereingang des Relaisventils und damit auch am Anschluss für den wenigstens einen Federspeicherbremszylinder erhöht wird.

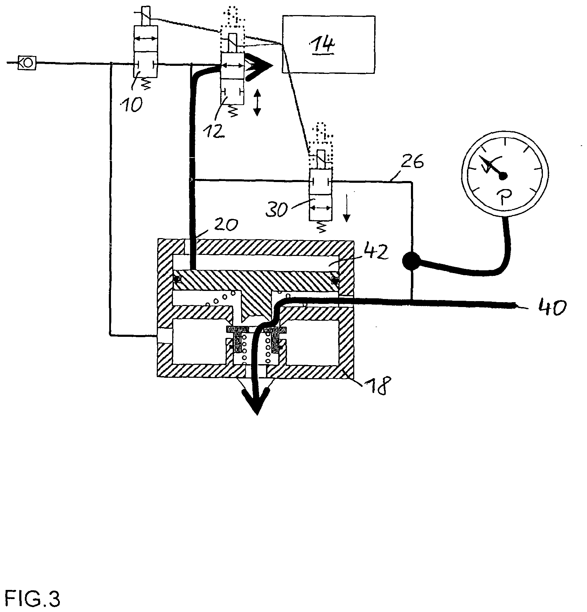

Für eine Drucksenkung an dem Anschluss für den wenigstens einen Federspeicherbremszylinder werden beispielsweise gemäß Fig.3 das zweite 2/2-Wegemagnetventil in Durchlassstellung und dritte 2/2-Wegemagnetventil in Sperrstellung geschaltet, so dass bei über das dritte 2/2-Wegemagnetventil gesperrtem Rückkopplungskreis der Druck am Steuereingang des Relaisventils und damit auch am Anschluss für den wenigstens einen Federspeicherbremszylinder verringert wird.

Im ersten Fall kann die elektronische Steuereinrichtung das erste 2/2-Wegemagnetventil und im zweiten Fall das zweite 2/2-Wegemagnetventil wechselweise oder gepulst in Sperrstellung und über einen demgegenüber längeren Zeitraum in Durchlassstellung steuern, um einen rampenförmigen oder allmählichen Druckanstieg oder Druckabfall zu erzielen, der gerade für ein feinfühliges Dosieren bzw. für eine Regelung der Feststellbremskraft bzw. des Feststellbremsdrucks insbesondere im Rahmen einer Hilfs- oder Notbremsung vorteilhaft ist.

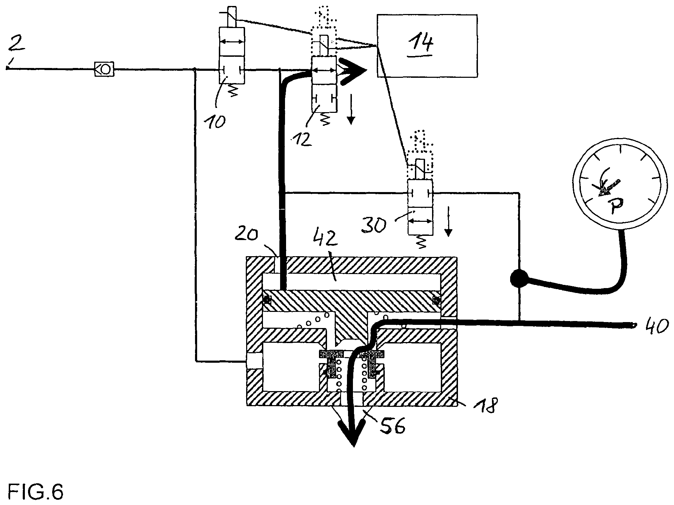

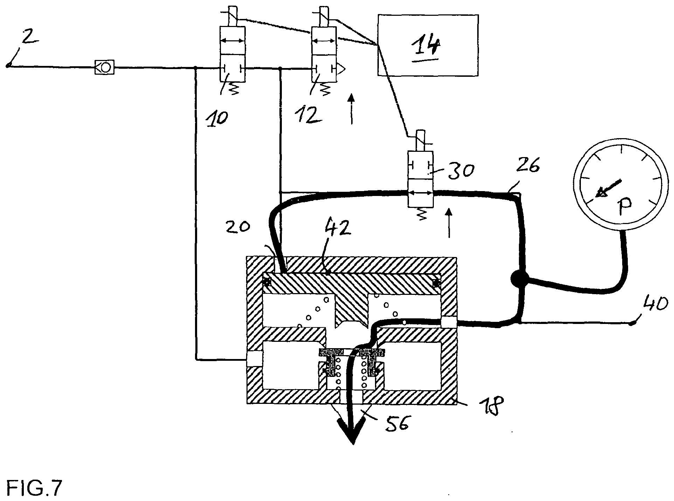

Gemäß einer Weiterbildung nach Fig.6 und Fig.7 kann bei einem Einsteuern eines einen Zustand "Feststellbremsen" repräsentierenden Feststellbremssignals in den Feststellbremssignalanschluss die elektronische Steuereinrichtung das erste 2/2-Wegemagnetventil in Sperrstellung und zunächst das zweite 2/2-Wegemagnetventil in Durchlassstellung und das dritte 2/2-Wegemagnetventil in Sperrstellung und dann das zweite 2/2-Wegemagnetventil in Sperrstellung und das dritte 2/2-Wegemagnetventil in Durchlassstellung steuern. Beispielsweise durch Bestromen werden daher zunächst über einen bestimmten Zeitraum das zweite 2/2-Wegemagnetventil in Durchlassstellung und das dritte 2/2-Wegemagnetventil in Sperrstellung geschaltet, während das das erste 2/2-Wegemagnetventil in Sperrstellung verbleibt. Nach Ablauf der bestimmten Zeitdauer, welche notwendig ist, damit der Druck am Anschluss für den wenigstens einen Federspeicherbremszylinder den Zuspanndruck des Federspeicherbremszylinders erreicht hat, werden dann das zweite 2/2-Wegemagnetventil in Sperrstellung und das dritte 2/2-Wegemagnetventil in Durchlassstellung gesteuert, damit der Zuspanndruck an dem Anschluss für den wenigstens einen Federspeicherbremszylinder "eingesperrt" wird.

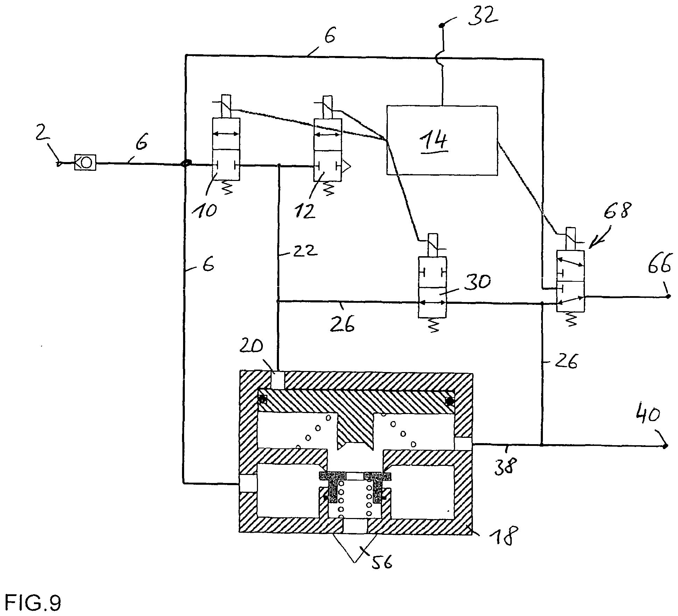

Besonders bevorzugt ist gemäß den Ausführungsformen von Fig.9 bis Fig.12 die elektromagnetische Bremssteuereinrichtung für eine Zugfahrzeug-Anhängerkombination vorgesehen und weist dann einen Anschluss für ein Anhängersteuerventil auf, welcher mit dem Anschluss für den wenigstens einen Federspeicherbremszylinder verbindbar ist.

Hierfür ist beispielsweise eine zweite, von der elektronischen Steuereinrichtung steuerbare Magnetventileinrichtung vorgesehen ist, welche ausgebildet ist, dass sie entweder den Vorratsanschluss mit dem Anschluss für das Anhängersteuerventil oder den Arbeitsausgang des Relaisventils mit dem Anschluss für das Anhängersteuerventil verbindet.

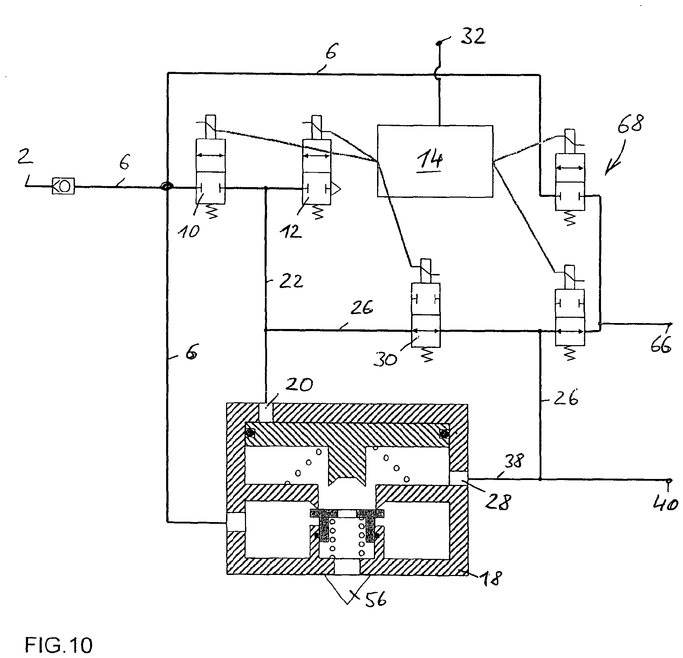

Vorzugsweise wird die zweite Magnetventileinrichtung durch ein einziges 3/2-Wegemagnetventil oder zwei 2/2-Wegemagnetventile gebildet, wie Fig.9 und Fig.10 zeigen.

Gemäß Fig.9 und Fig.10 kann beispielsweise bei einem Einsteuern eines einen Zustand "Test" repräsentierenden Feststellbremssignals in den Feststellbremssignalanschluss die zweite Magnetventileinrichtung von der elektronischen Steuereinrichtung gesteuert werden, dass sie den Vorratsanschluss mit dem Anschluss für das Anhängersteuerventil verbindet. Hierbei wird bei entlüftetem Anschluss für den wenigstens einen Federspeicherbremszylinder der Anschluss für das Anhängersteuerventil belüftet, zum Testen, ob das über den zugespannten wenigstens einen Federspeicherbremszylinder eingebremste Zugfahrzeug bei ungebremstem Anhänger die Zugfahrzeug-Anhängerkombination im Stillstand halten kann.

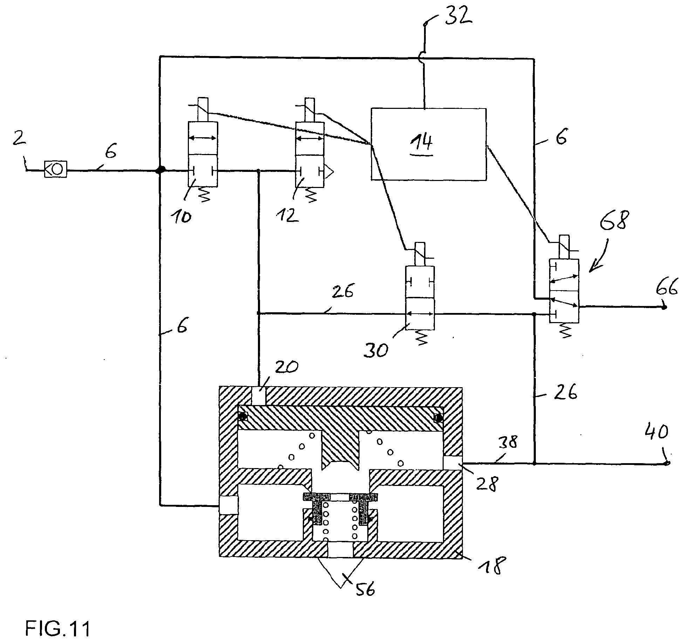

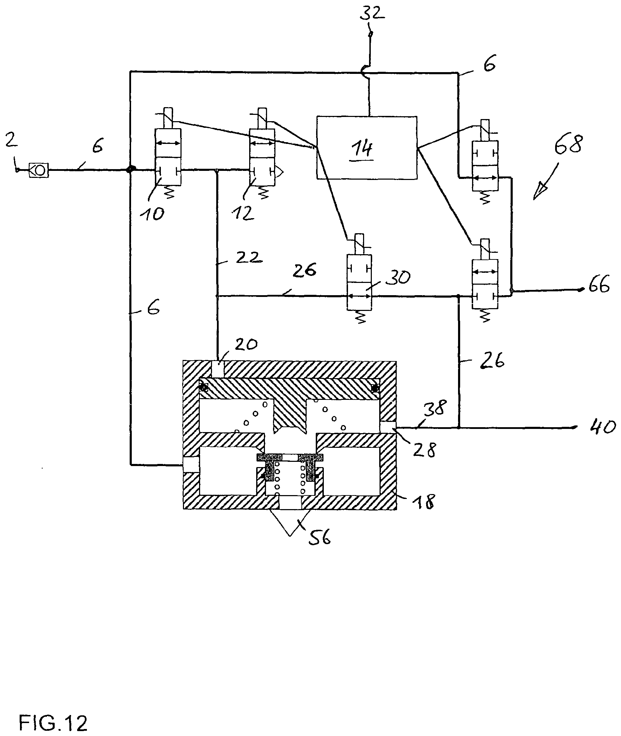

Wenn der Anhänger bei zugespannter Feststellbremse und außer Kraft gesetzter elektrischer Energieversorgung (Zündung "Aus") nicht mitgebremst werden soll, so muss der Anschluss für den wenigstens einen Federspeicherbremszylinder mit dem Vorratsanschluss verbunden sein. Die diesbezügliche Realisierung erfolgt ebenfalls mit einer zweiten Magnetventileinrichtung nach Fig.11 und Fig.12, welche dann ausgebildet ist, dass sie stromlos den Vorratsanschluss mit dem Anschluss für das Anhängersteuerventil verbindet. Andererseits verbindet dann die zweite Magnetventileinrichtung bestromt den Arbeitsausgang des Relaisventils mit dem Anschluss für das Anhängersteuerventil, beispielsweise um eine Druckregelung an den pneumatischen Bremsaktuatoren des Zugfahrzeugs und des Anhängers durchzuführen.

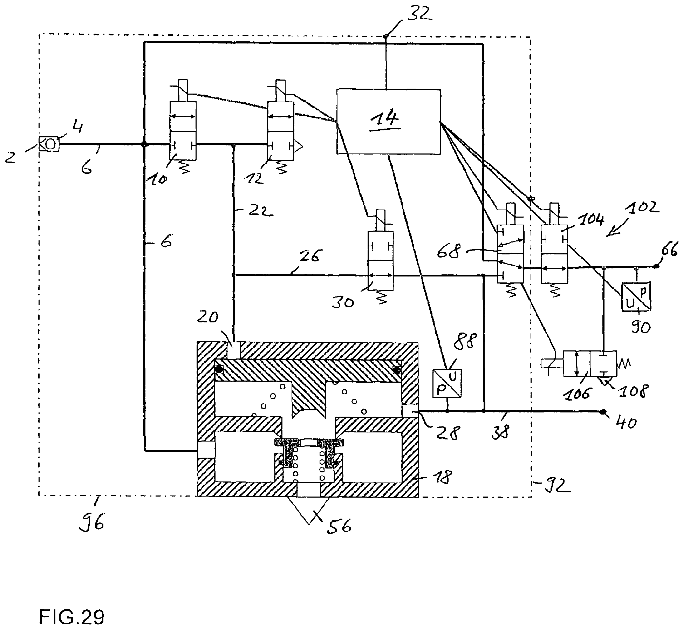

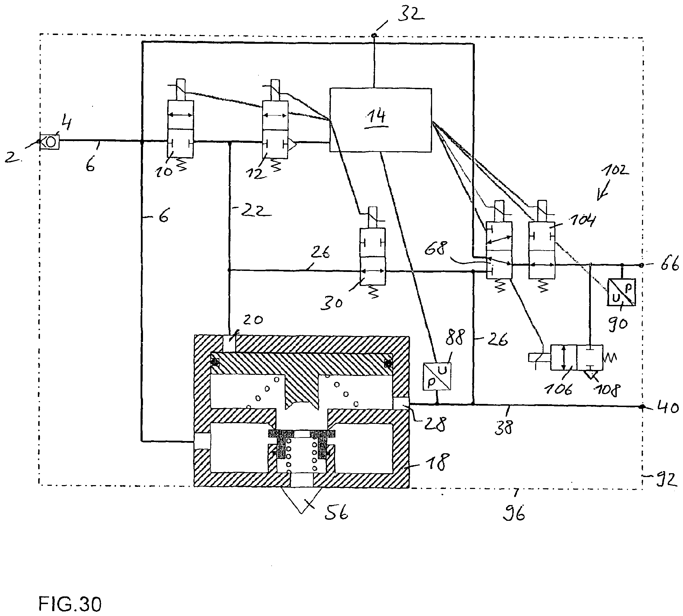

Nach Fig.29 und Fig.30 kann eine vierte Magnetventileinrichtung vorgesehen sein, durch welche der von der zweiten Magnetventileinrichtung an den Anschluss für das Anhängersteuerventil ausgesteuerte Druck absperrbar oder weiterleitbar ist, wobei durch die vierte Magnetventileinrichtung bei abgesperrtem von der zweiten Magnetventileinrichtung ausgesteuertem Druck der im Anhängersteuerventil anstehende Druck in Bezug auf eine Drucksenke absperrbar oder in diese Drucksenke weiter leitbar ist.

Wenn auch bei durch Ausfall oder Abschalten (Zündung "Aus") deaktivierter elektrischer Energieversorgung die Feststellbremse noch zuspannbar sein soll, so kann beispielsweise über ein Wechselventil (select low) und ein manuell betätigbares Ventil oder von einer zusätzlichen elektrischen Energieversorgung versorgtes Magnetventil der Steuereingang des Relaisventils entlüftet werden.

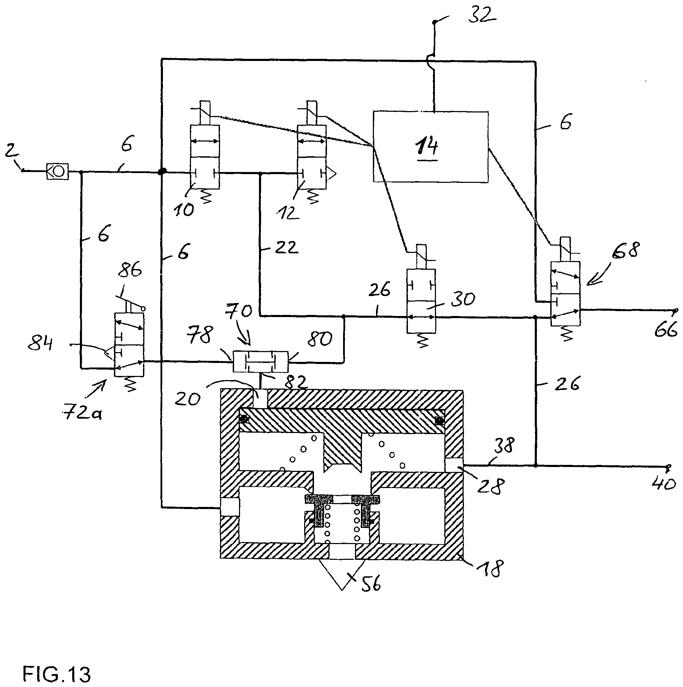

Demzufolge kann gemäß Fig.13 bis Fig.17 eine dritte Ventileinrichtung vorgesehen sein, mit wenigstens einem manuell oder elektrisch steuerbaren Ventil und einem Wechselventil, welches den kleineren von an seinen Einlässen anstehenden Drücken an einen Auslass weiter steuert, wobei das wenigstens eine Ventil ausgebildet ist, dass es entweder den Vorratsanschluss oder eine Drucksenke mit einem ersten Einlass des Wechselventils verbindet, dessen zweiter Einlass mit dem Anschluss für den wenigstens einen Federspeicherbremszylinder und dessen Auslass mit dem Steuereingang des Relaisventils verbindbar ist.

Hier kann insbesondere der zweite Einlass des Wechselventils direkt oder über das dritte 2/2-Wegemagnetventil mit dem Anschluss für den wenigstens einen Federspeicherbremszylinder und der Auslass des Wechselventils direkt oder über das dritte 2/2-Wegemagnetventil mit dem Steuereingang des Relaisventils verbunden sein.

Falls gemäß Fig. 13 der Auslass des Wechselventils direkt mit dem Steuereingang des Relaisventils verbunden ist, so hat dessen eingenommene Stellung stets Vorrang vor den weiteren Ventilen.

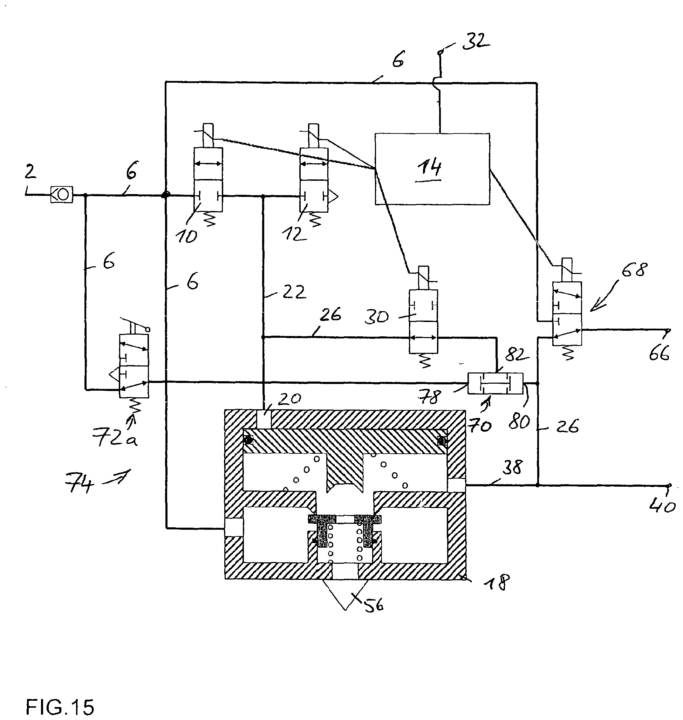

Falls gemäß Fig. 15 bis Fig. 17 der Auslass des Wechselventils über das dritte 2/2-Wegemagnetventil mit dem Steuereingang des Relaisventils verbunden ist, so kann die Wirkung des Wechselventils durch ein Schalten des dritten 2/2-Wegemagnetventils in Sperrstellung neutralisiert werden.

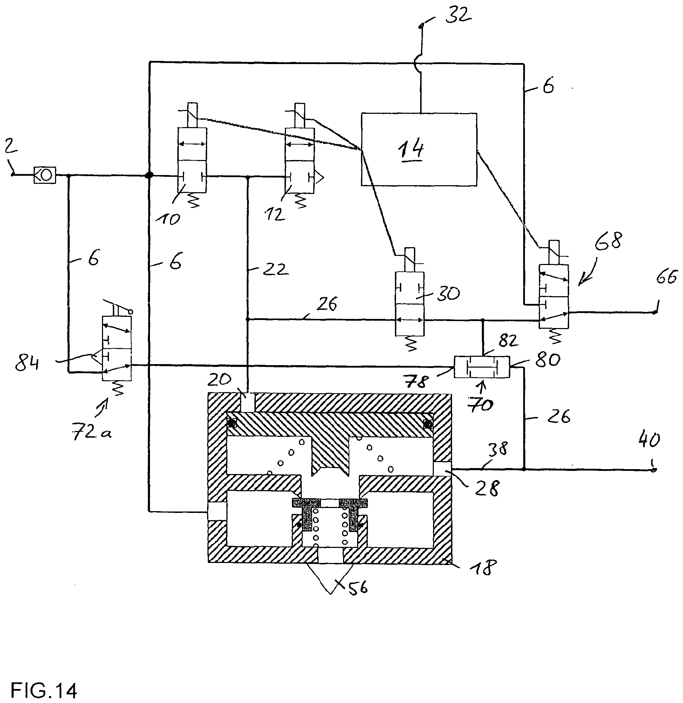

Falls gemäß Fig.14 der Auslass des Wechselventils über das dritte 2/2-Wegemagnetventil mit dem Steuereingang des Relaisventils und direkt mit dem Anschluss für das Anhängersteuerventil verbunden ist, so wird bei in Sperrstellung geschaltetem dritten 2/2-Wegeventil lediglich der Anschluss für das Anhängersteuerventil entlüftet und damit nur der Anhänger gebremst.

Falls dann als manuell steuerbares Ventil ein Ventil herangezogen wird, mit welchem der Ausgangsdruck stufbar ist, so ist ein Betrieb als Streckbremse möglich.

Um in der elektropneumatischen Bremssteuereinrichtung wirkende Drücke zu ermitteln und um Funktionen und Betriebszustände zu überwachen, können an unterschiedlichen Stellen Drucksensoren vorgesehen werden.

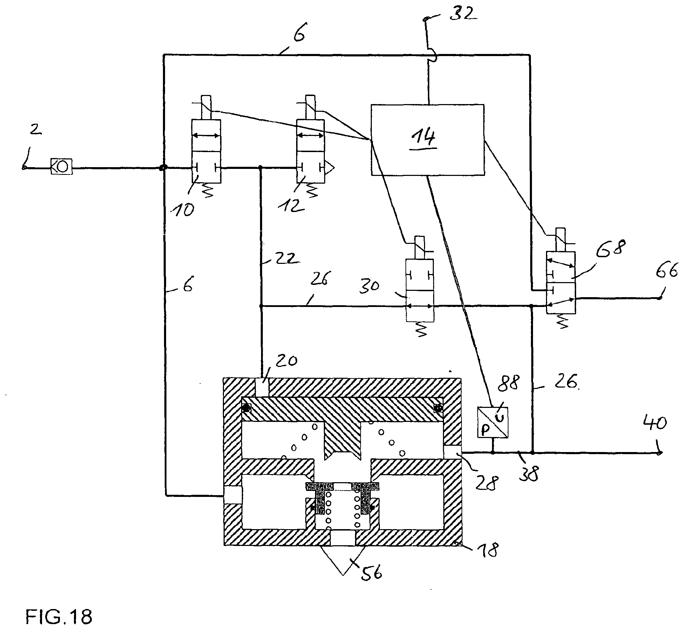

Nach Fig.18 bis Fig.24 kann daher wenigstens ein Drucksensor mit dem Anschluss für den wenigstens einen Federspeicherbremszylinder und/oder wenigstens ein Drucksensor mit dem Steuereingang des Relaisventils und/oder wenigstens ein Drucksensor mit Anschluss für das Anhängersteuerventil verbunden sein, der ein einen Ist-Druck repräsentierendes Signal in die elektronische Steuereinrichtung einsteuert.

Nach Fig.18 bis Fig.23 kann die elektronische Steuereinrichtung ausgebildet sein, dass sie auf der Basis eines einen Ist-Druck repräsentierenden Signals und eines über den Feststellbremssignalanschluss eingesteuerten, einen Wert für einen Soll-Druck repräsentierenden Signals einen Soll-Ist-Abgleich im Rahmen einer Druckregelung durchführt und/oder eine Druck-Plausibilitätsprüfung und/oder eine Ermittlung des am Vorratsanschluss anstehenden Vorratsdrucks durchführt.

Falls beispielsweise nach Fig.18 ein Drucksensor am Arbeitsausgang des Relaisventils angeschlossen und damit auch mit dem Anschluss für den wenigstens einen Federspeicherbremszylinder bzw. mit dem Anschluss für das Anhängersteuerventil verbindbar bzw. verbunden ist, so kann dort der Ist-Druck und daraus der Betriebszustand des wenigstens einen Federspeicherbremszylinders (gelöst, zugespannt bzw. teilweise gelöst oder zugespannt) ermittelt werden. Das Gleiche gilt dann auch für den Betriebszustand der Anhängerbremsen, welcher aus dem Ist-Druck am Anschluss für das Anhängersteuerventil ermittelbar ist. Weiterhin wird ein Druckregelkreis realisiert, bei welchem die erste Magnetventileinrichtung in Verbindung mit dem Relaisventil die Stellglieder bilden. Nicht zuletzt wird eine Fehlererkennung mittels Plausibilitätsprüfung ermöglicht, da z.B. von einem Fehler ausgegangen werden kann, wenn bei in Sperrstellung geschaltetem dritten 2/2-Wegemagnetventil und in Durchlassstellung geschaltetem zweiten 2/2-Wegemagnetventil nach einiger Zeit immer noch ein Ist-Druck gemessen wird, welcher größer als der Atmosphärendruck ist.

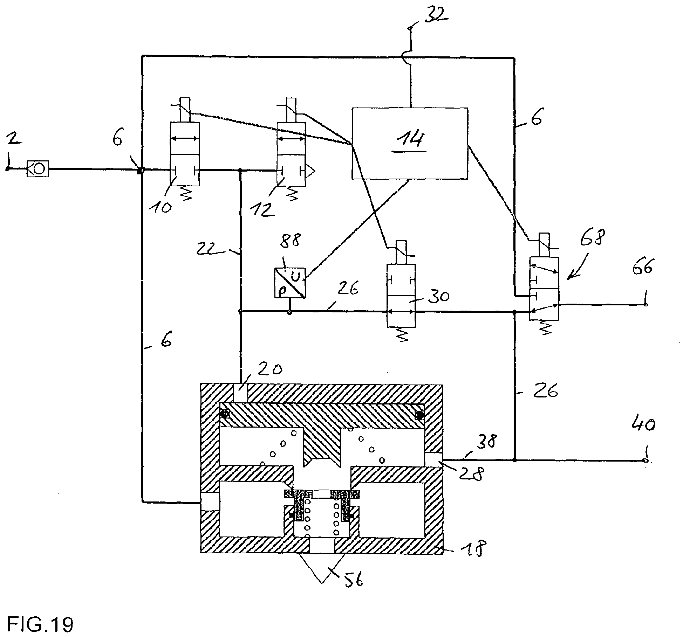

Falls gemäß Fig.19 ein Drucksensor mit dem Steuereingang des Relaisventils verbunden wird, so kann sehr schnell der von dem ersten und zweiten 2/2-Wegemagnetventil eingeregelte Ist-Druck ermittelt werden, was in einer hohen Dynamik des Druckregelkreis resultiert. Darüber hinaus können auch der Betriebszustand des wenigstens einen Federspeicherbremszylinders (gelöst, zugespannt bzw. teilweise gelöst oder zugespannt) sowie der dort herrschende Ist-Bremsdruck ermittelt werden. Das Gleiche gilt dann auch für den Betriebszustand der Anhängerbremsen. Nicht zuletzt wird eine Fehlererkennung mittels Plausibilitätsprüfung ermöglicht, da z.B. von einem Fehler ausgegangen werden kann, wenn bei in Sperrstellung geschaltetem dritten 2/2-Wegemagnetventil und in Durchlassstellung geschaltetem zweiten 2/2-Wegemagnetventil nach einiger Zeit immer noch ein Ist-Druck gemessen wird, welcher größer als der Atmosphärendruck ist.

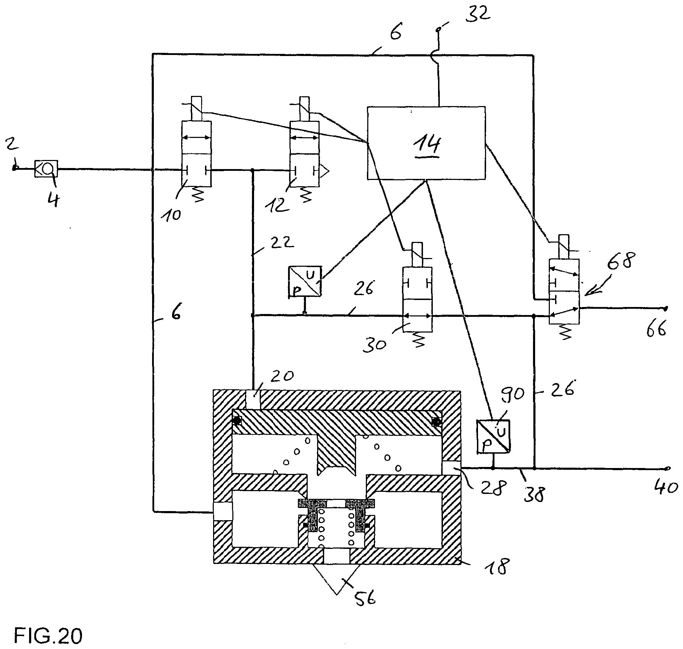

Falls gemäß Fig.20 ein erster Drucksensor mit dem Steuereingang und ein zweiter Drucksensor mit dem Arbeitsausgang des Relaisventils verbunden werden, ermöglicht dies eine Fehlererkennung mittels Plausibilitätsprüfung. Beispielsweise müssen die Ist-Druckwerte des ersten und zweiten Drucksensors je nach Betriebszustand unter Berücksichtigung von bestimmten Toleranzen in einer bestimmten Relation zueinander stehen. Dabei ist die Fehlererkennung oder Fehlerüberwachung schnell, vollständig und in mehreren Betriebszuständen durchführbar. Weiterhin ergibt sich eine schnellere Druckregelung als wenn nur ein Drucksensor am Arbeitsausgang des Relaisventils oder ein Drucksensor am Steuereingang des Relaisventils angeordnet ist.

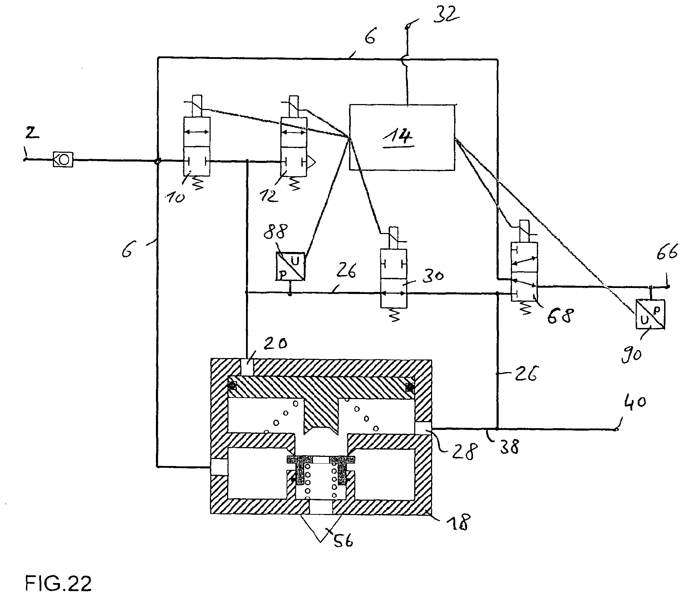

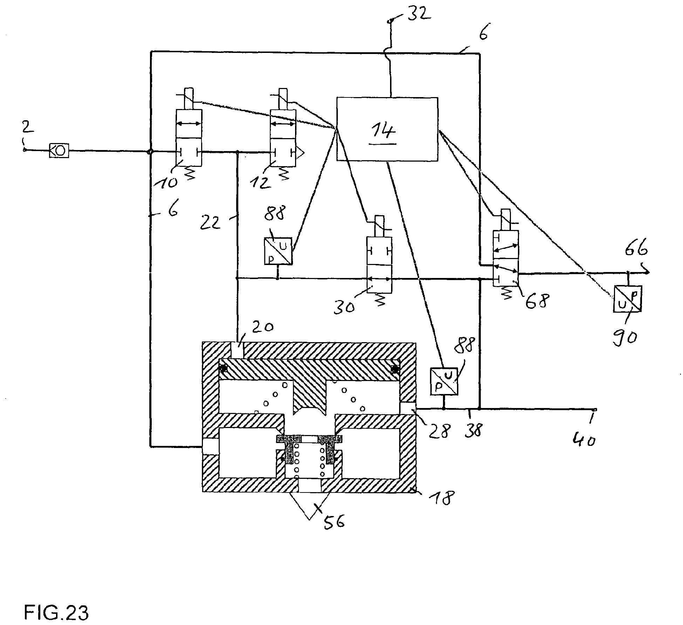

Falls gemäß Fig.22 und Fig.23 zusammen mit einem Drucksensor am Arbeitsausgang und/oder am Steuereingang des Relaisventils ein weiterer Drucksensor mit dem Anschluss des Anhängersteuerventils verbunden wird, so ist in mehreren Betriebszuständen eine direkte Messung des Vorratsdrucks am Vorratanschluss möglich, ohne dass der Betriebszustand "Fahren" eingestellt werden muss. Weiterhin ist auch eine schnelle Fehlererkennung mittels Plausibilitätsprüfung möglich. Beispielsweise müssen die Ist-Drücke der Drucksensoren gleiche Werte anzeigen, wenn die Magnetventile so geschaltet werden, dass eine Druckverbindung zwischen den Drucksensoren zustande kommt. Wie zuvor ist auch in mehreren Betriebszuständen eine Ermittlung des Vorratsdrucks möglich. Vorteilhafter Weise wird dadurch auch eine Druckregelung des Drucks am Anschluss für das Anhängersteuerventil möglich, wenn der Betriebszustand "Streckbremse vorgesehen ist, in dem zum Strecken der Zugfahrzeug-Anhängerkombination lediglich die Anhängerbremsen, nicht aber die Zugfahrzeugbremsen dosiert zugespannt werden.

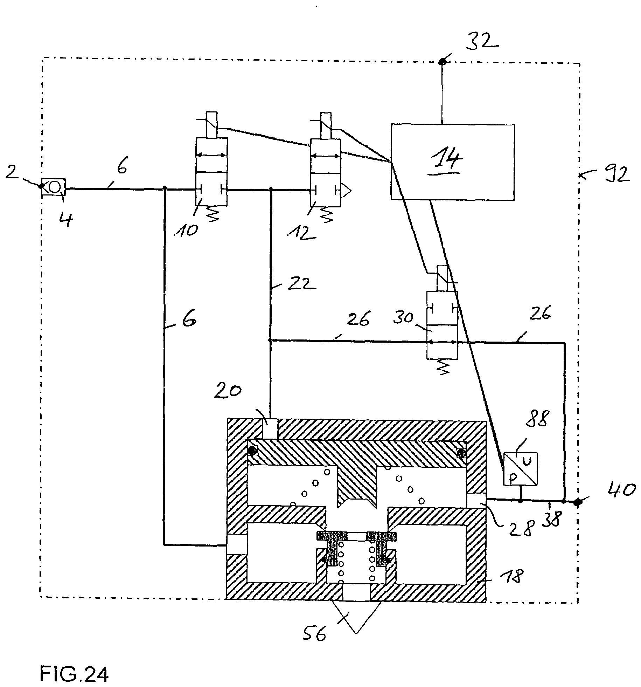

Gemäß einer Weiterbildung nach Fig.24 können wenigstens das Relaisventil, die erste Magnetventileinrichtung, das Rückschlagventil, die elektronische Steuereinrichtung sowie der Vorratsanschluss, der Anschluss für den wenigstens einen Federspeicherbremszylinder und der Feststellbremssignalanschluss in einer Baueinheit ausgebildet sein. Dies resultiert in einer kompakten Baueinheit, welche als Grundmodul weiter ausbaufähig ist.

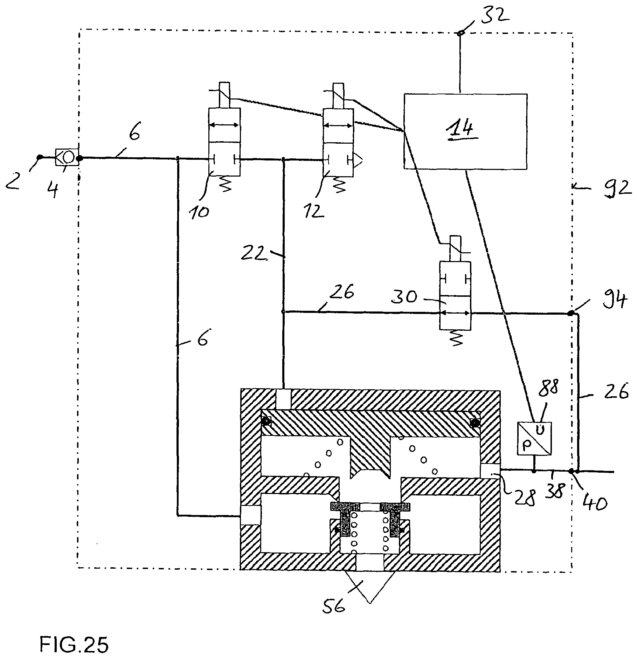

Vorzugsweise werden gemäß Fig.25 das Rückschlagventil und wenigstens ein Teil einer Rückkopplungsleitung zwischen dem Steuereingang des Relaisventils bzw. dem dritten 2/2-Wegemagnetventil und dem Anschluss für den wenigstens einen Federspeicherbremszylinder außerhalb der Baueinheit angeordnet. Dann kann als Baueinheit ein bei elektronisch geregelten Bremsen üblicherweise verwendetes Parkbremsmodul (EPM) verwendet und entsprechend modifiziert werden.

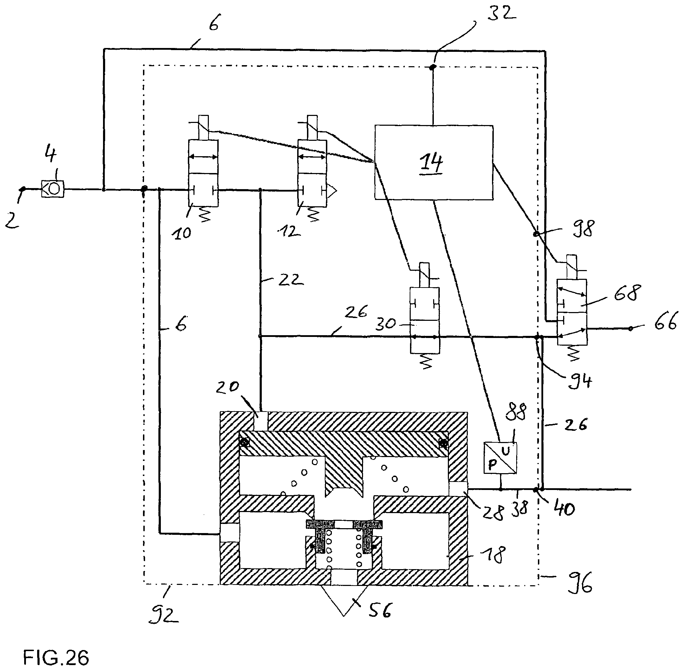

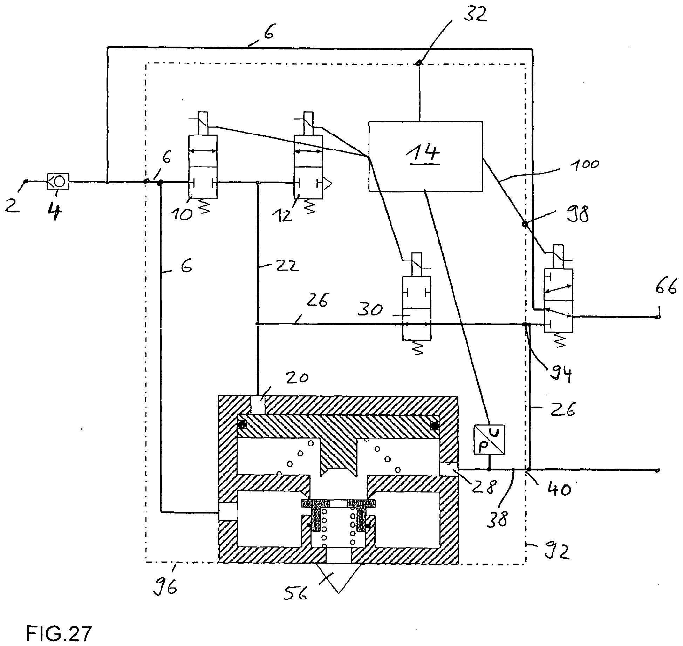

Zusätzlich kann gemäß Fig.26 und Fig.27 die zweite Magnetventileinrichtung außerhalb der Baueinheit angeordnet sein. Mit an die Baueinheit extern angeflanschter und verkabelter zweiter Magnetventileinrichtung zur Realisierung der Testfunktion oder zur Steuerung der Anhängerbremsen kann hierfür beispielsweise ein übliches und in hoher Stückzahl gefertigtes ASR-Magnetventil (Antischlupfregelungsventil) verwendet werden.

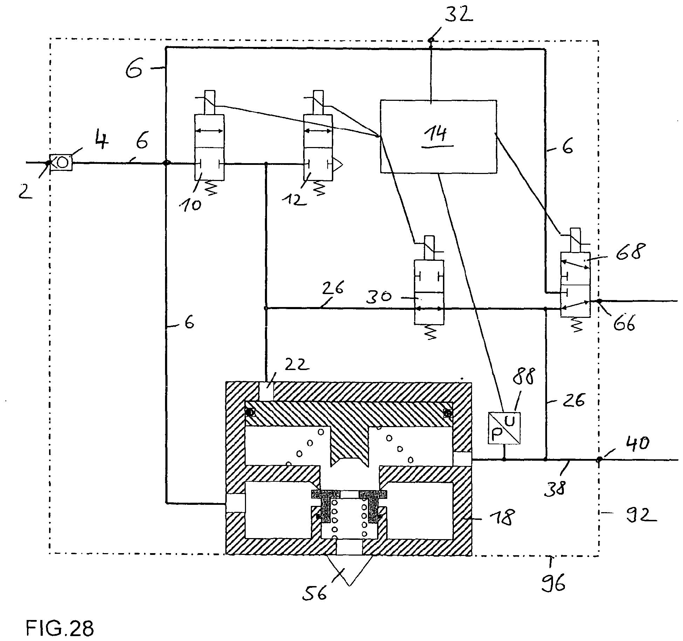

Alternativ hierzu kann gemäß Fig.28 die zweite Magnetventileinrichtung auch innerhalb der Baueinheit angeordnet werden, wodurch der Aufwand für externe Verrohrung und Verkabelung verringert wird.

Gemäß einer Weiterbildung nach Fig.29 und Fig.30 kann die vierte Magnetventileinrichtung, durch welche die Funktion "Streckbremsen" realisiert wird, außerhalb oder innerhalb der der Baueinheit angeordnet sein.

Die Erfindung betrifft auch eine Bremsanlage eines Fahrzeugs, beinhaltend eine oben beschriebene elektropneumatische Bremssteuereinrichtung, insbesondere eine elektropneumatische Bremsanlage einer Zugfahrzeug-Anhängerkombination und insbesondere als elektronisch geregelte Bremsanlage (EBS).

Weitere die Erfindung verbessernde Maßnahmen werden nachstehend gemeinsam mit der Beschreibung eines Ausführungsbeispiels der Erfindung anhand der Zeichnung näher dargestellt.

Zeichnung

In der Zeichnung zeigt

Fig.1 ein schematisches Schaltbild einer bevorzugten Ausführungsform einer elektropneumatischen Bremssteuereinrichtung gemäß der Erfindung;

Fig.2 das Schaltbild von Fig.1 in einem Zustand, in dem die Federspeicherbremse dosiert gelöst wird;

Fig.3 das Schaltbild von Fig.1 in einem Zustand, in dem die Federspeicherbremse dosiert zugespannt wird;

Fig.4 das Schaltbild von Fig.1 in einem Zustand, in dem die Bremssteuereinrichtung in den Betriebszustand "Fahren" gebracht wird;

Fig.5 das Schaltbild von Fig.1 in einem Zustand, in dem die Bremssteuereinrichtung sich im Betriebszustand "Fahren" befindet;

Fig.6 das Schaltbild von Fig.1 in einem Zustand, in dem die Bremssteuereinrichtung in den Betriebszustand "Parken" gebracht wird;

Fig.7 das Schaltbild von Fig.1 in einem Zustand, in dem die Bremssteuereinrichtung sich im Betriebszustand "Parken" befindet;

Fig.8 ein schematisches Schaltbild einer weiteren Ausführungsform einer elektropneumatischen Bremssteuereinrichtung mit einem Relaisventil mit gestuftem Relaiskolben;

Fig.9 ein schematisches Schaltbild einer weiteren Ausführungsform einer elektropneumatischen Bremssteuereinrichtung mit einer zusätzlichen Magnetventileinrichtung zur Realisierung einer Testfunktion;

Fig.10 ein schematisches Schaltbild einer Abwandlung der Ausführungsform von Fig.9;

Fig. 11 ein schematisches Schaltbild einer weiteren Ausführungsform einer elektropneumatischen Bremssteuereinrichtung mit einer zusätzlichen Magnetventileinrichtung zur Realisierung von Anhängersteuerfunktionen;

Fig.12 ein schematisches Schaltbild einer Abwandlung der Ausführungsform von Fig. 11;

Fig.13 ein schematisches Schaltbild einer weiteren Ausführungsform einer elektropneumatischen Bremssteuereinrichtung;

Fig. 14 ein schematisches Schaltbild einer weiteren Ausführungsform einer elektropneumatischen Bremssteuereinrichtung;

Fig.15 ein schematisches Schaltbild einer weiteren Ausführungsform einer elektropneumatischen Bremssteuereinrichtung;

Fig.16 ein schematisches Schaltbild einer weiteren Ausführungsform einer elektropneumatischen Bremssteuereinrichtung;

Fig. 17 ein schematisches Schaltbild einer weiteren Ausführungsform einer elektropneumatischen Bremssteuereinrichtung;

Fig.18 ein schematisches Schaltbild einer weiteren Ausführungsform einer elektropneumatischen Bremssteuereinrichtung mit einem Drucksensor;

Fig. 19 ein schematisches Schaltbild einer weiteren Ausführungsform einer elektropneumatischen Bremssteuereinrichtung mit einem Drucksensor;

Fig.20 ein schematisches Schaltbild einer weiteren Ausführungsform einer elektropneumatischen Bremssteuereinrichtung mit zwei Drucksensoren;

Fig.21 ein schematisches Schaltbild einer weiteren Ausführungsform einer elektropneumatischen Bremssteuereinrichtung mit zwei Drucksensoren;

Fig.22 ein schematisches Schaltbild einer weiteren Ausführungsform einer elektropneumatischen Bremssteuereinrichtung mit zwei Drucksensoren;

Fig.23 ein schematisches Schaltbild einer weiteren Ausführungsform einer elektropneumatischen Bremssteuereinrichtung mit zwei Drucksensoren;

Fig.24 ein schematisches Schaltbild einer weiteren Ausführungsform einer elektropneumatischen Bremssteuereinrichtung als Baueinheit;

Fig.25 ein schematisches Schaltbild einer weiteren Ausführungsform einer elektropneumatischen Bremssteuereinrichtung als Baueinheit mit externen Bauteilen;

Fig.26 ein schematisches Schaltbild einer weiteren Ausführungsform einer elektropneumatischen Bremssteuereinrichtung als Baueinheit mit externen Bauteilen;

Fig.27 ein schematisches Schaltbild einer weiteren Ausführungsform einer elektropneumatischen Bremssteuereinrichtung als Baueinheit mit externen Bauteilen;

Fig.28 ein schematisches Schaltbild einer weiteren Ausführungsform einer elektropneumatischen Bremssteuereinrichtung als Baueinheit mit weiteren integrierten Bauteilen;

Fig.29 ein schematisches Schaltbild einer weiteren Ausführungsform einer elektropneumatischen Bremssteuereinrichtung mit einer zusätzlichen Magnetventileinrichtung zur Realisierung einer Streckbremsfunktion;

Fig.30 ein schematisches Schaltbild einer weiteren Ausführungsform einer elektropneumatischen Bremssteuereinrichtung mit einer zusätzlichen Magnetventileinrichtung zur Realisierung einer Streckbremsfunktion.

Beschreibung der Ausführungsbeispiele

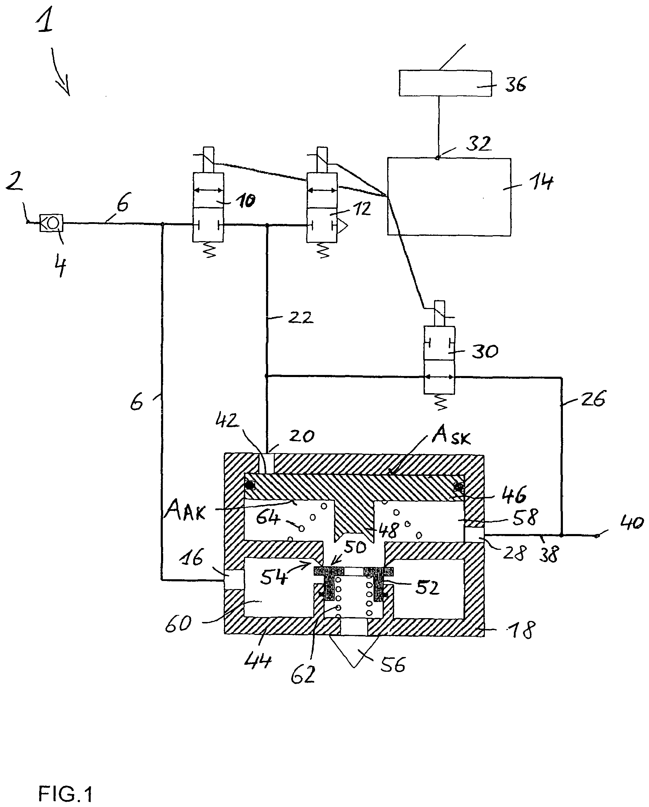

Fig.1 zeigt ein schematisches Schaltbild einer bevorzugten Ausführungsform einer elektropneumatischen Bremssteuereinrichtung 1 gemäß der Erfindung. Die elektropneumatischen Bremssteuereinrichtung 1 stellt bevorzugt eine Komponente einer elektropneumatischen Bremseinrichtung einer Zugfahrzeug-Anhängerkombination, insbesondere eines elektronisch geregelten Bremsanlage (EBS) dar und ist auf dem Zugfahrzeug angeordnet.

Die elektropneumatische Bremssteuereinrichtung 1 hat einen Vorratsanschluss 2, der über ein Rückschlagventil 4 abgesichert ist. Von dem Vorratsanschluss 2 erstreckt sich eine Vorratsleitung 6 einerseits zu einer ersten Magnetventileinrichtung 8 mit einem ersten 2/2-Wegemagnetventil 10 als Einlassventil und einem zweiten 2/2-Wegemagnetventil 12 als Auslassventil. Das erste 2/2-Wegemagnetventil 10 befindet sich wie das zweite 2/2-Wegemagnetventil 12 unbestromt in der gezeigten Sperrstellung, während beide Ventile 10, 12 bestromt in die Durchlassstellung umschalten und von einer elektronischen Steuereinrichtung 14 gesteuert werden.

Weiterhin ist auch ein Vorratseingang 16 eines Relaisventils über die Vorratsleitung 6 an den Vorratsanschluss 2 angeschlossen. Ein pneumatischer Steuereingang 20 des Relaisventils 18 ist über eine Steuerleitung 22 mit der Kombination aus Einlassventil 10 (erstes 2/2-Wegemagnetventil) und Auslassventil 12 (zweites 2/2-Wegemagnetventil) verbunden.

Im Einzelnen ist in der stromlosen Sperrstellung des zweiten 2/2-Wegemagnetventils 12 die Verbindung zwischen der Steuerleitung 22 bzw. dem Steuereingang 20 des Relaisventils 18 und einer Drucksenke 24 unterbrochen, während diese Verbindung in der bestromten Durchlassstellung geschaltet ist. In analoger Weise ist in der stromlosen Sperrstellung des ersten 2/2-Wegemagnetventils 10 die Verbindung zwischen der Steuerleitung 22 bzw. dem Steuereingang 20 des Relaisventils 18 und dem Vorratsanschluss 2 unterbrochen, während diese Verbindung in der bestromten Durchlassstellung geschaltet ist.

Darüber hinaus ist ein drittes, in eine Rückkopplungsleitung 26 zwischen einen Arbeitsausgang 28 des Relaisventils 18 und den Steuereingang 20 des Relaisventils 18 geschaltetes 2/2-Wegemagnetventil 30 vorgesehen, durch welches der Arbeitsausgang 28 des Relaisventils 18 mit dem Steuereingang 20 des Relaisventils 18 verbindbar (Durchlassstellung) bzw. diese Verbindung unterbrechbar (Sperrstellung) ist. Das dritte 2/2-Wegemagnetventil 30 wird ebenfalls mittels der Steuereinrichtung 14 gesteuert, die über einen Feststellbremssignalanschluss 32 und eine Signalleitung 34 von einem Feststellbremssignalgeber 36 ausgesteuerte Feststellbremssignale empfangen kann.

Alle drei 2/2-Wegemagnetventil 10, 12, 30 sind bevorzugt in ihre stromlose Stellung federbelastet vorgespannt und werden durch Bestromung mittels der Steuereinrichtung 14 umgeschaltet.

Der Arbeitsausgang 28 des Relaisventils 18 ist mittels einer Arbeitsleitung 38 mit einem Anschluss 40 für wenigstens einen Federspeicherbremszylinder verbunden. An diesem Anschluss 40 sind bevorzugt zwei hier nicht gezeigte Federspeicherbremszylinder an der Hinterachse angeschlossen.

Die Steuerleitung 22 bzw. der Steuereingang 20 des Relaisventils 18 wird je nach Schaltstellung des ersten 2/2-Wegemagnetventils 10 und des zweiten 2/2-Wegemagnetventil 12 (Einlass-/Auslassmagnetventilkombination) be- oder entlüftet, so dass eine Be- oder Entlüftung durch Luftmengenverstärkung mittels des Relaisventils 18 eine entsprechende Be- oder Entlüftung des Arbeitsausgangs 28 und damit des Anschlusses 40 für den wenigstens einen Federspeicherbremszylinder nach sich zieht.

Das Relaisventil 18 ist in bekannter Weise aufgebaut und beinhaltet eine über den Steuereingang 20 an die Steuerleitung angeschlossene Steuerkammer 42, einen die Steuerkammer 42 begrenzenden, in einem Gehäuse 44 beweglichen Relaiskolben 46 mit einem an dem Relaiskolben 46 bzw. an dessen Relaisventilkolbenstange ausgebildeten Ventilkörper 48, der mit einem Auslasssitz 50 an einem ebenfalls im Gehäuse 44 beweglich aufgenommenen zweiten Ventilkolben 52 ein Auslassventil eines Doppelsitzventils ausbildet. Weiterhin beinhaltet das Relaisventil 18 einen am Gehäuse 44 ausgebildeten Einlasssitz 54, gegen welchen der zweite Ventilkolben 52 vorgespannt und mit diesem zusammen ein Einlassventil des Doppelsitzventils bildet. Der zweite Ventilkolben 52 weist außerdem eine mittige Durchgangsbohrung auf, die bei vom zweiten Ventilkolben 52 abgehobenem Relaiskolben 46 eine Entlüftung 56 mit einer Arbeitskammer 58 verbindet, die mit dem Arbeitsausgang 28 verbunden ist, um diesen zu entlüften. Andererseits ist eine mit dem Vorratseingang 16 in Verbindung stehende Vorratskammer 60 bei von dem Einlasssitz 54 abgehobenen zweiten Ventilkolben 52 mit der Arbeitskammer 58 verbunden, um den Arbeitsausgang 28 zu belüften. Die Stellung des Relaiskolbens 46, der mit seinem Ventilkörper 48 den zweiten Ventilkolben 52 nach unten drücken kann, um ihn vom Einlasssitz 54 abzuheben wird demnach durch den Druck am Steuereingang 20 bzw. in der Steuerkammer 42 bestimmt. Schließlich wird der zweite Ventilkolben 52 mittels einer Ventilkolbenfeder 62 gegen den Einlasssitz 54 gedrängt. Außerdem drängt eine Relaiskolbenfeder 64 mit der Kraft $F_F$ den Relaiskolben 46 vom Auslasssitz 50 weg in Richtung Steuerkammer 42.

Die Schaltzustände der drei 2/2-Wegemagnetventile 10, 12, 30 werden durch die Steuereinrichtung 14 bestimmt, insbesondere in Abhängigkeit von den an dem Feststellbremssignalanschluss 32 anstehenden Feststellbremssignalen. Hierzu ist der Feststellbremssignalgeber 36 ausgebildet, dass er betätigungsabhängig Feststellbremssignale aussteuert, welche die weiter unter beschriebenen Betriebszustände repräsentieren.

Anstatt durch den oder zusätzlich zu dem durch den Fahrer manuell bedienbaren Feststellbremssignalgeber 36 können Feststellbremssignale auch von einem weiteren Steuereinrichtung in die Steuereinrichtung 14 eingesteuert werden, beispielsweise von einem Fahrerassistenzsystem wie beispielsweise von einem Anfahrhilfesystem an Steigungen.

Im Einzelnen beaufschlagt der Druck $p_{SK}$ in der Steuerkammer 42 die dieser zugewandte Fläche $A_{SK}$ des Relaiskolbens 46, der Arbeitskammerdruck $p_{AK}$ wirkt auf die dieser zugewandten Fläche $A_{AK}$. Die der Steuerkammer 42 zugewandte Fläche $A_{SK}$ des Relaiskolbens 46 ist größer als die der Arbeitskammer 58 zugewandte Fläche $A_{AK}$.

Auf den Relaiskolben 46 wirken also folgende Kräfte:

$$\text{Aus Richtung Steuerkammer:} \quad F_{st} = p_{SK} A_{SK}$$

$$\text{Aus Richtung Arbeitskammer:} \quad F_{AK} = F_F + p_{AK} A_{AK}$$

Wird der zweite Ventilkolben 52 nach unten bewegt, so muss zusätzlich die Kraft $F_{F2}$ der Ventilkolbenfeder 62 überwunden werden. Schließlich müssen noch die Reibkräfte $F_{Reibung}$ der Dichtungen und Führungen von Relaiskolben 46 und zweitem Ventilkolben 52 überwunden werden, wenn der Relaiskolben 46 bewegt werden soll.

Vor diesem Hintergrund ist die Funktionsweise der elektromagnetischen Bremssteuereinrichtung 1 wie folgt:

In dem in Fig.1 gezeigten Grundzustand der elektropneumatischen Bremssteuereinrichtung 1 sind sowohl das erste 2/2-Wegemagnetventil 10, das zweite 2/2-Wegemagnetventil 12 als auch das dritte 2/2-Wegemagnetventil 30 unbestromt, so dass über das in Durchlassstellung geschaltete dritte 2/2-Wegemagnetventil 30 der Steuereingang 20 mit dem Arbeitsausgang 28 des Relaisventils 18 verbunden ist. Damit ist die Rückkopplung stabil und es kann keine Druckluft vom Vorratsanschluss 2 zum Steuereingang 20 des Relaisventils 18 gelangen bzw. von diesem zur Drucksenke 24 entweichen. Damit wird auch der gerade herrschende Druck an dem Anschluss 40 für den wenigstens einen Federspeicherbremszylinder und dadurch auch dessen Zuspann- bzw. Lösestellung konstant gehalten.

Soll nun auf ein entsprechendes Signal des Feststellbremswertgebers 36 hin der Druck an dem Anschluss 40 für den wenigstens einen Federspeicherbremszylinder erhöht werden, beispielsweise im Betriebszustand "Hilfsbremse", so wird gemäß Fig.2 zunächst das dritte 2/2-Wegemagnetventil 30 für die Dauer der Regelung bestromt, wodurch die Verbindung zwischen Arbeitskammer 58 und Steuerkammer 42 unterbrochen wird. Dann wird durch Bestromung des ersten 2/2-Wegemagnetventils 10 der Druck in der Steuerkammer 42 des Relaisventils 18 erhöht. Dies erfolgt insbesondere durch Pulsen des ersten 2/2-Wegemagnetventils 10.

Wenn dann gilt:

$$p_{SK} A_{SK} > F_F + F_{F2} + p_{AK} A_{AK} + F_{Reibung} ,$$

so bewegt sich der Relaiskolben 46 nach unten, öffnet den Einlasssitz 54 des Doppelsitzventils und lässt Vorratsdruck in die Arbeitskammer 58 einströmen. Wenn dann gilt:

$$p_{SK} A_{SK} + F_{Reibung} = F_F + p_{AK} A_{AK}$$

bewegt sich der Relaiskolben 46 zurück bis in eine Neutralstellung, in welche Einlasssitz 54 und Auslasssitz 50 des Doppelsitzventils geschlossen sind.

Soll demgegenüber auf ein entsprechendes Signal des Feststellbremswertgebers 36 hin gemäß Fig.3 ein geringerer Druck an dem Anschluss 40 für den wenigstens einen Federspeicherbremszylinder eingeregelt werden, beispielsweise im Betriebszustand "Hilfsbremse", so wird vorzugsweise durch Pulsen des zweiten 2/2-Wegemagnetventils 12 der Steuerdruck in der Steuerkammer 42 abgesenkt, bis gilt:

$$p_{SK}A_{SK} + F_{Reibung} < F_F + p_{AK}A_{AK}.$$

Dann bewegt sich der Relaiskolben 46 in Richtung Steuerkammer 42 und entlüftet die Arbeitskammer 58 über den Auslasssitz 50 des Doppelsitzventils, bis wieder Kräftegleichgewicht herrscht, worauf der Relaiskolben 46 wieder in Neutralstellung übergeht.

Zum Herstellen des Betriebszustands "Fahren" gemäß Fig.4 auf ein entsprechendes Signal des Feststellbremswertgebers 36 hin werden das erste und das dritte 2/2-Wegemagnetventil 10, 30 über längere Zeit bestromt. Dadurch wird die Steuerkammer 42 belüftet, bis dort Vorratsdruck herrscht. Da die Wirkfläche $A_{SK}$ für den Druck $p_{SK}$ in der Steuerkammer 42 größer ist als die Wirkfläche $A_{AK}$ für den Druck $p_{AK}$ in der Arbeitskammer 58, überwiegt nun die aus dem Druck in der Steuerkammer 42 wirkende Kraft gegenüber der aus dem Druck in der Arbeitskammer 58 wirkenden Kraft auf den Relaiskolben 46 und es gilt:

$$p_{SK}A_{SK} >> F_F + F_{F2} + p_{AK}A_{AK}$$

Dadurch wird der Relaiskolben 46 stabil in seine untere, zur Arbeitskammer 58 weisende Endposition gedrückt, so dass er den Einlasssitz 54 des Doppelsitzventils öffnet und dadurch die Arbeitskammer 58 mit dem Vorratsanschluss 2 verbindet.

Nun wird das dritte 2/2-Wegemagnetventil 30 entstromt und nimmt dadurch seine Durchlassstellung ein, um Steuerkammer 42 und Arbeitskammer 58 pneumatisch miteinander zu verbinden. Da nun die Steuerkammer 42 über das dritte 2/2-Wegemagnetventil 30, die Arbeitskammer 58 und den Einlasssitz 54 permanent mit Vorratsdruck versorgt wird, kann auch das erste 2/2-Wegemagnetventil 10 entstromt und damit in Sperrstellung geschaltet werden. Es gilt nun:

$$p_{SK} = p_{AK} = p_{Verorgung}$$

Der stabile Betriebszustand "Fahren ist in Fig. 5 gezeigt, in dem der Druck in der Steuerkammer 42 und der Arbeitskammer 58 gleich dem Atmosphärendruck ist. Dann überwiegt die Kraft der Relaiskolbenfeder 64 und der Relaiskolben 46 wird in Richtung Steuerkammer 42 gedrückt bzw. gehalten, wodurch die Arbeitskammer 58 und über das dritte 2/2-Wegemagnetventil 50 auch die Steuerkammer 42 entlüftet sind. Auch im Falle einer geringen Undichtigkeit z. B. des ersten 2/2-Wegemagnetventils 10 gegen Vorratsdruck würde dieses über das dritte 2/2-Wegemagnetventil 30 und den Auslasssitz 50 des Doppelsitzventils des Relaisventils 18 entlüftet.

Solange gilt:

$$p_{Versorgung}A_{SK} + F_{Reibung} > F_F + F_{F2} + p_{Versorgung}A_{AK}$$

bleibt der Relaiskolben 46 in der Belüftungsstellung.

Zum Herstellen des Betriebszustands "Parken" gemäß Fig.6 werden das zweite 2/2-Wegemagnetventil 12 und das dritte 2/2-Wegemagnetventil über eine gewisse Zeitdauer bestromt. Dadurch wird die Steuerkammer 42 entlüftet, bis dort Atmosphärendruck herrscht. Nun wirken außer geringer Reibungskräfte nur noch Kräfte in Richtung Steuerkammer 42 auf den Relaiskolben 46. Dieser bewegt sich nach oben und entlüftet auch die Arbeitskammer 58. Die Relaiskolbenfeder 64 sorgt dafür, dass sich der Relaiskolben 46 bis in seine obere Endstellung bewegt und dort verharrt, wodurch der Auslasssitz 50 vollständig geöffnet ist. Dann wird das dritte 2/2-Wegemagnetventil 30 entstromt, so dass die Steuerkammer 42 und die Arbeitskammer 58 miteinander pneumatisch verbunden werden. Da nun die Steuerkammer 42 über das dritte 2/2-Wegemagnetventil 30, die Arbeitskammer 58 und den Auslasssitz 50 permanent mit Atmosphäre verbunden ist, kann auch das zweite 2/2-Wegemagnetventil 12 entstromt werden, um in seine Sperrstellung über zu gehen.

Im stabilen Betriebszustand "Parken" gemäß Fig.7 sinkt der Versorgungsdruck oder Vorratsdruck $p_{Versorgung}$

unter einen bestimmten Schwellwert ab, so dass irgendwann die von der Relaiskolbenfeder 64 auf den Relaiskolben 46 wirkende Kraft überwiegt und der Einlasssitz 54 geschlossen, der Auslasssitz 50 geöffnet und der Druck in der Arbeitskammer 58 entlüftet wird. Da das dritte 2/2-Wegemagnetventil 30 die Steuerkammer 42 mit der Arbeitskammer 58 verbindet, wird nun auch die Steuerkammer 42 entlüftet, wodurch die Federkräfte nun noch mehr überwiegen. Die Parkbremse geht automatisch in die stabile Parkstellung.

Bei den nachfolgend beschriebenen Ausführungsformen sind gleiche oder gleich wirkende Bauteile und Komponenten mit Bezug auf die voranstehend beschriebene Ausführungsform mit den gleichen Bezugszahlen gekennzeichnet.

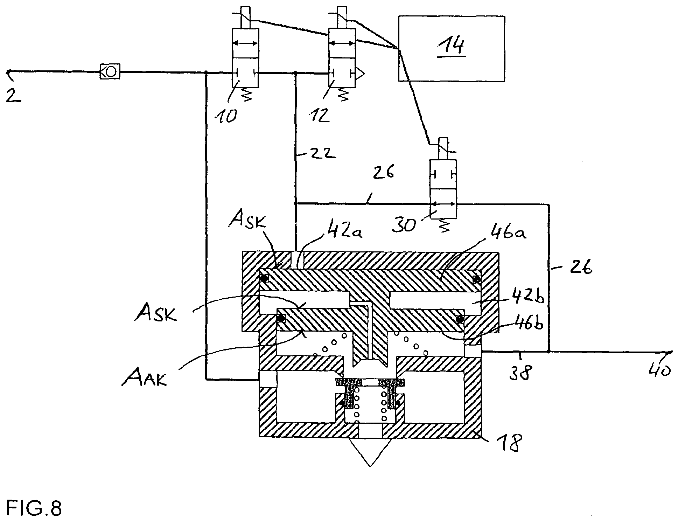

Bei der oben beschriebenen Ausführungsform ist die der Steuerkammer 42 zugewandte Wirkfläche $A_{SK}$ des Relaiskolbens 46 größer als die der Arbeitskammer 58 zugewandte Wirkfläche $A_{AK}$. Wenn der Unterschied in den Wirkflächen noch größer sein soll, so kann gemäß der Ausführungsform von Fig.8 auch ein Stufenkolben 46a, 46b als Relaiskolben verwendet werden, bei dem zwei miteinander verbundene Steuerkammern 42a, 42b vorhanden sind, wobei eine erste Steuerkammer 42a zwischen dem Gehäuse 44 und einem ersten Relaiskolben 46a und eine zweite Steuerkammer 42b zwischen dem ersten Relaiskolben 46a und einem zweiten Relaiskolben 46b gebildet wird und beide Relaiskolben 46a, 46b auf den mit dem Auslasssitz 50 zusammen wirkenden Ventilkörper 48 wirken. Auf diese Weise wird die Wirkfläche $A_{SK}$ für den Druck $p_{SK}$ in den Steuerkammern 42a, 42b gegenüber der Wirkfläche $A_{AK}$ für den Druck $p_{AK}$ in der Arbeitskammer 58 wesentlich vergrößert.

Falls mittels der elektropneumatischen Bremssteuereinrichtung 1 eine Ansteuerung eines Anhängersteuerventils (ASV) vorgesehen ist, so kann diese so dargestellt werden, dass der an dem Anschluss 40 für den wenigstens seinen Federspeicherbremszylinder anstehende Druck gleichzeitig zu einem Anschluss 66 für ein Anhängersteuerventil geleitet wird. In diesem Fall muss der Fahrer jedoch die Möglichkeit haben, bei eingelegter Parkbremse den Anschluss 66 für das Anhängersteuerventil zu belüften, damit die Bremsen des Anhängers lösen und der Fahrer testen kann, ob die Federspeicherbremse des Zugfahrzeugs alleine die Zugfahrzeug-Anhänger-Kombination im Stillstand halten kann ("Testfunktion"). Diese "Testfunktion" wird durch eine zweite, von der elektronischen Steuereinrichtung 14 steuerbare Magnetventileinrichtung 68 realisiert, die vorzugsweise ein einziges 3/2-Wegemagnetventil gemäß Fig.9 oder zwei 2/2-Wegemagnetventile gemäß Fig.10 beinhaltet bzw. gebildet wird. Die Magnetventile 68 sind bevorzugt so geschaltet, dass sie im unbestromten Zustand den Anschluss 66 für das Anhängersteuerventil mit dem Anschluss 40 für den wenigstens einen Federspeicherbremszylinder verbinden und im bestromten Zustand mit dem Vorratsanschluss 2. Mit anderen Worten ist die zweite Magnetventileinrichtung 68 ausgebildet, dass sie entweder den Vorratsanschluss 2 mit dem Anschluss 66 für das Anhängersteuerventil oder den Arbeitsausgang 28 des Relaisventils 18 mit dem Anschluss 66 für das Anhängersteuerventil verbindet. Dabei ist die zweite Magnetventileinrichtung 68 bevorzugt in die Rückkopplungsleitung 26 geschaltet.

Wenn der Anhänger bei voll zugespannter Parkbremse und abgeschalteter Stromversorgung nicht mitbremsen soll, so muss der Anschluss 66 für das Anhängersteuerventil bei diesen Betriebsbedingungen mit Vorratsdruck verbunden sein. Wird jedoch der Druck am Anschluss 66 für das Anhängersteuerventil gerade geregelt, insbesondere während des Betriebszustands "Fahren" beispielsweise im Rahmen der Funktion "Hilfsbremsen", so soll der Anhänger mitbremsen. Diese Funktionalität wird bevorzugt ebenfalls mittels der zweiten Magnetventileinrichtung 68 beispielsweise in Form eines einzigen 3/2-Wegemagnetventils nach Fig. 11 oder zweier 2/2-Wegemagnetventile nach Fig. 12 realisiert. Diese Magnetventile 68 sind jedoch gegenüber Fig.9 und Fig.10 umgekehrt verschaltet, so dass im stromlosen Zustand Vorratsdruck am Anschluss 66 für das Anhängersteuerventil ansteht und während einer Druckregelung durch Bestromung dieser Magnetventile 68 der Anschluss 66 für das Anhängersteuerventil mit dem Anschluss 40 für den wenigstens einen Federspeicherbremszylinder verbunden ist. Die zweite Magnetventileinrichtung 69 nach Fig.11 und Fig.12 ist dann ausgebildet ist, dass sie stromlos den Vorratsanschluss 2 mit dem Anschluss 66 für das Anhängersteuerventil verbindet. Andererseits verbindet die zweite Magnetventileinrichtung 68 bestromt den Arbeitsausgang 28 des Relaisventils 18 mit dem Anschluss 66 für das Anhängersteuerventil.

Wenn auch bei durch Ausfall oder Abschalten (Zündung "Aus") deaktivierter elektrischer Energieversorgung die Feststellbremse noch zuspannbar sein soll, so kann beispielsweise über ein Wechselventil (select low) 70 und ein manuell betätigbares Ventil 72a oder von einer gegenüber der vorhandenen Bordenergieversorgung (z.B. Batterie) zusätzlichen elektrischen Energieversorgung 73 (z.B. weitere Batterie) versorgtes Magnetventil 72b der Steuereingang 20 des Relaisventils 18 entlüftet werden.

Demzufolge kann gemäß der Ausführungsformen von Fig.13 bis Fig.17 eine dritte Ventileinrichtung 74 vorgesehen sein, mit beispielsweise einem manuell oder elektrisch steuerbaren Ventil 72a, 72b und einem Wechselventil 70, welches den kleineren von an seinen Einlässen 78, 80 anstehenden Drücken an einen Auslass 82 weiter steuert, wobei das Ventil 72a, 7b ausgebildet ist, dass es entweder den Vorratsanschluss 2 oder eine Drucksenke 84 mit einem ersten Einlass 78 des Wechselventils 70 verbindet, dessen zweiter Einlass 80 mit dem Anschluss 40 für den wenigstens einen Federspeicherbremszylinder und dessen Auslass 82 mit dem Steuereingang 20 des Relaisventils 18 verbindbar ist.

Hier kann insbesondere der zweite Einlass 80 des Wechselventils 70 direkt (Fig.14, Fig.15, Fig.16, Fig.17) oder über das dritte 2/2-Wegemagnetventil 30 (Fig.13) mit dem Anschluss 40 für den wenigstens einen Federspeicherbremszylinder und der Auslass 82 des Wechselventils 70 direkt (Fig.13) oder über das dritte 2/2-Wegemagnetventil 30 (Fig.14, Fig.15, Fig.16, Fig.17) mit dem Steuereingang 20 des Relaisventils 18 verbunden sein.

Falls gemäß Fig.13 der Auslass 82 des Wechselventils 70 direkt mit dem Steuereingang 20 des Relaisventils 18 verbunden ist, so hat dessen eingenommene Stellung stets Vorrang vor den weiteren Ventilen.

Falls gemäß Fig.14 als manuelles Ventil 72a ein stufbares Ventil eingesetzt wird, d.h. ein Ventil 72a, dessen Ausgangsdruck abhängig vom Betätigungsgrad eines Betätigungsorgans 86 des Ventils 72a ist, der erste Einlass 78 des Wechselventils 70 an das stufbare Ventil 72a, der zweite Einlass 80 des Wechselventils 70 an den Anschluss 40 für den wenigstens einen Federspeicherbremszylinder und der Auslass 82 des Wechselventils 70 mit dem Anschluss 66 für das Anhängersteuerventil verbunden wird oder hier über die zweite Magnetventileinrichtung 68 verbindbar ist, so kann der Betriebzustand "Streckbremse" realisiert werden, indem ein gradueller oder gestufter Druck in den Steuereingang 20 des Relaisventils 18 eingesteuert wird, wobei dann an dem Anschluss 66 für das Anhängersteuerventil wiederum ein gestuft oder graduell einstellbarer Druck ansteht.

Falls gemäß Fig.15 bis Fig.17 der Auslass 82 des Wechselventils 70 über das dritte 2/2-Wegemagnetventil 30 mit dem Steuereingang 20 des Relaisventils 18 verbunden ist, so kann die Wirkung des Wechselventils 70 durch ein Schalten des dritten 2/2-Wegemagnetventils 30 in Sperrstellung neutralisiert werden.

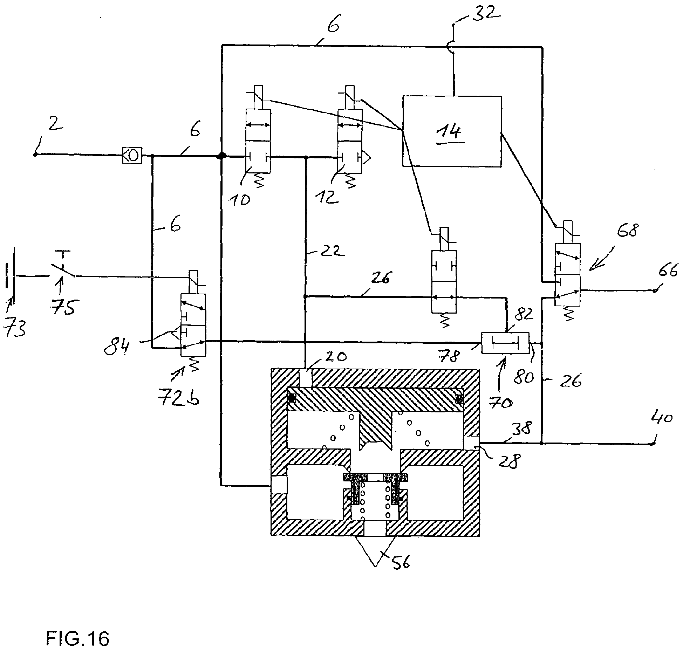

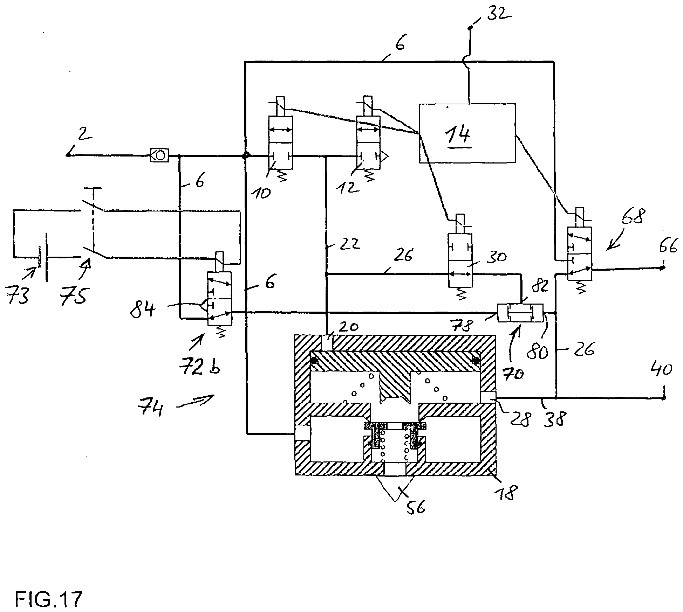

Gemäß Fig.16 und Fig.17 wird anstatt eines manuellen Ventils 72a ein Magnetventil 72b verwendet, welches mittels eines elektrischen Schalters 75 betätigt wird, der es mit der zusätzlichen elektrischen Energiequelle 73 verbindet. Um zu verhindern, dass das Magnetventil 72b durch einen Fehler in der Verkabelung versehentlich bestromt wird, kann gemäß Fig.17 ein Schalter mit doppeltem Schaltkontakt für den Pluspol und Masse verwendet werden.

Nach den in Fig.18 bis Fig.23 gezeigten Ausführungsformen ist die elektronische Steuereinrichtung 14 ausgebildet, dass sie auf der Basis eines einen Ist-Druck repräsentierenden Signals und eines über den Feststellbremssignalanschluss 32 eingesteuerten, einen Wert für einen Soll-Druck repräsentierenden Feststellbremssignals einen Soll-Ist-Abgleich im Rahmen einer Druckregelung und/oder eine Druck-Plausibilitätsprüfung und/oder eine Ermittlung des am Vorratsanschluss 2 anstehenden Vorratsdrucks durchführt.

Falls beispielsweise nach der Ausführungsform von Fig.18 ein Drucksensor 88 am Arbeitsausgang 28 des Relaisventils 18 angeschlossen und damit auch mit dem Anschluss 40 für den wenigstens einen Federspeicherbremszylinder bzw. mit dem Anschluss 66 für das Anhängersteuerventil verbindbar bzw. verbunden ist, so kann dort der Ist-Druck und daraus der Betriebszustand des wenigstens einen Federspeicherbremszylinders (gelöst, zugespannt bzw. teilweise gelöst oder zugespannt) ermittelt werden. Das Gleiche gilt dann auch für den Betriebszustand der Anhängerbremsen, welcher aus dem Ist-Druck am Anschluss 66 für das Anhängersteuerventil ermittelbar ist, wenn sich die zweite Magnetventileinrichtung 68 in der Stellung befindet, in welcher der Anschluss 66 für das Anhängersteuerventil mit dem Anschluss 40 für den wenigstens einen Federspeicherbremszylinder verbunden ist.

Weiterhin wird ein Druckregelkreis realisiert, bei welchem die erste Magnetventileinrichtung 8 in Verbindung mit dem Relaisventil 18 die Stellglieder bilden. Nicht zuletzt wird eine Fehlererkennung mittels Plausibilitätsprüfung ermöglicht, da z.B. von einem Fehler ausgegangen werden kann, wenn bei in Sperrstellung geschaltetem dritten 2/2-Wegemagnetventil 30 und in Durchlassstellung geschaltetem zweiten 2/2-Wegemagnetventil 12 nach einiger Zeit immer noch ein Ist-Druck gemessen wird, welcher größer als der Atmosphärendruck ist.

Falls gemäß Fig.19 ein Drucksensor 88 mit dem Steuereingang 20 des Relaisventils verbunden wird, so kann sehr schnell der von dem ersten und zweiten 2/2-Wegemagnetventil 10, 12 eingeregelte Ist-Druck ermittelt werden, was in einer hohen Dynamik des Druckregelkreises resultiert. Darüber hinaus können auch der Betriebszustand des wenigstens einen Federspeicherbremszylinders (gelöst, zugespannt bzw. teilweise gelöst oder zugespannt) sowie der dort herrschende Ist-Bremsdruck ermittelt werden. Das Gleiche gilt dann auch für den Betriebszustand der Anhängerbremsen. Nicht zuletzt wird eine Fehlererkennung mittels Plausibilitätsprüfung ermöglicht, da z.B. von einem Fehler ausgegangen werden kann, wenn bei in Sperrstellung geschaltetem dritten 2/2-Wegemagnetventil 30 und in Durchlassstellung geschaltetem zweiten 2/2-Wegemagnetventil 12 nach einiger Zeit immer noch ein Ist-Druck gemessen wird, welcher größer als der Atmosphärendruck ist.

Falls gemäß Fig.20 ein erster Drucksensor mit dem Steuereingang und ein zweiter Drucksensor 90 mit dem Arbeitsausgang 28 des Relaisventils 18 verbunden werden, ermöglicht dies auch eine Fehlererkennung mittels Plausibilitätsprüfung. Beispielsweise müssen die Ist-Druckwerte des ersten und zweiten Drucksensors 88, 90 je nach Betriebszustand unter Berücksichtigung von bestimmten Toleranzen in einer bestimmten Relation zueinander stehen. Dabei ist die Fehlererkennung oder Fehlerüberwachung schnell, vollständig und in mehreren Betriebszuständen durchführbar. Weiterhin ergibt sich eine schnellere Druckregelung als wenn nur ein Drucksensor 90 am Arbeitsausgang 28 des Relaisventils 18 oder ein Drucksensor 88 am Steuereingang 20 des Relaisventils 18 angeordnet ist.

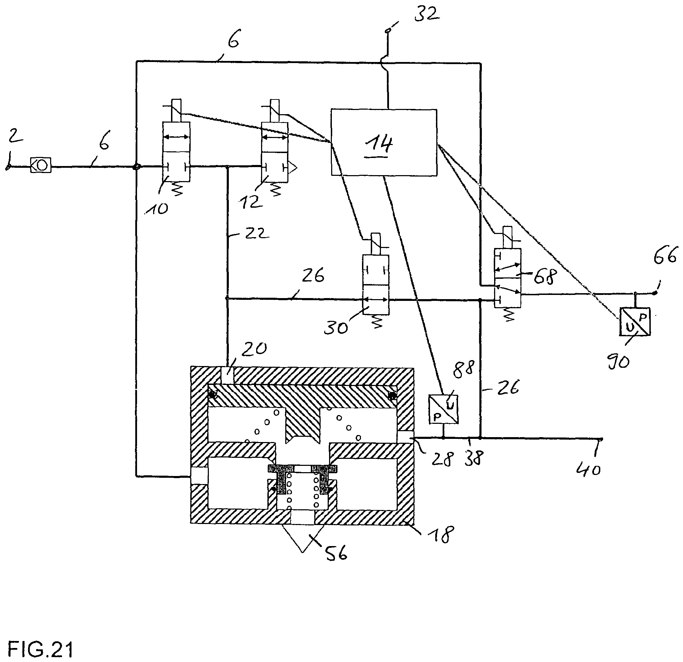

Bei der Ausführungsform von Fig.21 sind ein erster Drucksensor 88 mit dem Arbeitsausgang 28 des Relaisventils 18 und ein zweiter Drucksensor 90 mit dem Anschluss 66 für das Anhängersteuerventil verbunden, so dass neben einer Druckregelung auch eine Plausibilitätsprüfung möglich ist. Denn der Druck an dem Anschluss 66 für das Anhängersteuerventil muss dem Druck an dem Anschluss 40 für den wenigstens einen Federspeicherbremszylinder entsprechen, wenn die zweite Magnetventileinrichtung 68 eine entsprechende Verbindung schaltet.

Falls gemäß Fig. 22 und Fig.23 zusammen mit einem ersten Drucksensor 88 am Arbeitsausgang und/oder am Steuereingang 20 des Relaisventils 18 ein zweiter Drucksensor 90 mit dem Anschluss 66 des Anhängersteuerventils verbunden wird, so ist in mehreren Betriebszuständen eine direkte Messung des Vorratsdrucks am Vorratanschluss möglich, ohne dass der Betriebszustand "Fahren" eingestellt werden muss. Weiterhin ist auch eine schnelle Fehlererkennung mittels Plausibilitätsprüfung möglich. Beispielsweise müssen die Ist-Drücke der Drucksensoren 88, 90 gleiche Werte anzeigen, wenn die Magnetventile 10, 12, 30, 68 so geschaltet werden, dass eine Druckverbindung zwischen den Drucksensoren 88, 90 zustande kommt. Wie zuvor ist auch in mehreren Betriebszuständen eine Ermittlung des Vorratsdrucks möglich. Vorteilhafter Weise wird dadurch auch eine Druckregelung des Drucks am Anschluss 66 für das Anhängersteuerventil möglich, wenn der Betriebszustand "Streckbremse vorgesehen ist, in dem zum Strecken der Zugfahrzeug-Anhängerkombination lediglich die Anhängerbremsen, nicht aber die Zugfahrzeugbremsen dosiert zugespannt werden.

Gemäß der Ausführungsform von Fig.24 sind das Relaisventil 18, die erste Magnetventileinrichtung 8 (erstes, zweites und drittes 2/2-Wegemagnetventil 10, 12, 30), das Rückschlagventil 4, die elektronische Steuereinrichtung 14 sowie der Vorratsanschluss 2, der Anschluss 40 für den wenigstens einen Federspeicherbremszylinder und der Feststellbremssignalanschluss 32 in einer in Fig.24 durch eine strichpunktierte Linie symbolisierte Baueinheit 92 ausgebildet, die hier ein erweiterbares Grundmodul darstellt. In das Grundmodul bzw. die Baueinheit 92 ist weiterhin ein Drucksensor 88 integriert, der hier beispielsweise mit dem Anschluss 40 für den wenigstens einen Federspeicherbremszylinder verbunden ist. Weiterhin sind natürlich auch die die genannten Komponenten pneumatisch oder elektrisch miteinander verbindenden elektrischen und pneumatischen Leitungen in die Baueinheit 92 integriert. Die Baueinheit oder das Grundmodul 92 kann ein einziges Gehäuse aufweisen oder aus mehreren aneinander geflanschten Gehäusen bestehen.

Bei der Ausführungsform von Fig.25 ist das Grundmodul von Fig.24 dahingehend modifiziert, dass das Rückschlagventil 4 und wenigstens ein Teil der Rückkopplungsleitung 26 zwischen dem Steuereingang 20 des Relaisventils 18 bzw. dem dritten 2/2-Wegemagnetventil 30 und dem Anschluss 40 für den wenigstens einen Federspeicherbremszylinder außerhalb der Baueinheit 92 angeordnet ist. Für den externen Teil der Rückkopplungsleitung 26 ist dann ein eigener Anschluss 94 am Gehäuse 96 der Baueinheit 92 vorgesehen. Dann kann als Baueinheit 92 ein bei elektronisch geregelten Bremsen üblicherweise verwendetes Parkbremsmodul (EPM) verwendet und durch die genannten äußeren Modifikationen angepasst werden.

Zusätzlich kann gemäß Fig.26 und Fig.27 die zweite Magnetventileinrichtung 68 außerhalb der Baueinheit 92 angeordnet sein. Die beispielsweise extern angeflanschte zweite Magnetventileinrichtung 68 wird dann von einer auch externen Vorratsleitung 6 mit Druckluft versorgt. Schließlich ist auch am Gehäuse 96 der Baueinheit 92 ein elektrischer Anschluss 98 für die zweite Magnetventileinrichtung 68 vorgesehen, damit diese über eine Signalleitung 100 von der Steuereinrichtung 14 der Baueinheit 92 gesteuert werden kann.

Mit an die Baueinheit 92 extern angeflanschter und verkabelter zweiter Magnetventileinrichtung 68 zur Realisierung der Testfunktion und/oder zur Steuerung der Anhängerbremsen kann hierfür beispielsweise ein übliches und in hoher Stückzahl gefertigtes ASR-Magnetventil (Antischlupfregelungsventil) verwendet werden.

Alternativ hierzu kann gemäß Fig.28 die zweite Magnetventileinrichtung 68 auch innerhalb der Baueinheit 92 angeordnet werden, wodurch der Aufwand für externe Verrohrung und Verkabelung verringert wird.

Gemäß einer Weiterbildung nach Fig.29 und Fig.30 kann eine vierte Magnetventileinrichtung 102, durch welche die Funktion "Streckbremsen" realisiert wird, außerhalb oder innerhalb der der Baueinheit 92 angeordnet sein. Diese vierte Magnetventileinrichtung 102 beinhaltet ein viertes 2/2-Wegemagnetventil 104, welches einerseits mit dem Anschluss 66 für das Anhängersteuerventil und andererseits mit einem fünften 2/2-Wegemagnetventil 106 verbunden ist, welches den Druck an dem vierten 2/2-Wegemagnetventil 104 in seiner Durchlassstellung an eine Drucksenke 108 weiter schaltet. Diese vierte Magnetventileinrichtung 102 ist in Strömungsrichtung gesehen der zweiten Magnetventileinrichtung 68 nachgeordnet, durch welche hier die "Testfunktion" realisiert wird.

Zum Streckbremsen muss das Anhängersteuerventil dosiert entlüftet werden können, weshalb hierzu das vierte 2/2-Wegemagnetventil generell in Durchlassstellung und das fünfte 2/2-Wegemagnetventil abhängig von dem entsprechenden elektrischen Zuspannsignal z.B. wechselweise oder gepulst von der Sperrstellung in die Durchlassstellung geschaltet wird.

Die Kombination von Merkmalen unterschiedlicher Ausführungsformen der Erfindung ist möglich und wird hiermit angeregt.

Bezugszeichenliste

| | |
|---|---|
| 1 | Bremssteuereinrichtung |
| 2 | Vorratsanschluss |
| 4 | Rückschlagventil |

| | |
|---|---|
| 6 | Vorratsleitung |
| 8 | erste Magnetventileinrichtung |
| 10 | erstes 2/2-Wegemagnetventil |
| 12 | zweites 2/2-Wegemagnetventil |
| 14 | Steuereinrichtung |
| 16 | Vorratseingang |
| 18 | Relaisventil |
| 20 | Steuereingang |
| 22 | Steuerleitung |
| 24 | Drucksenke |
| 26 | Rückkopplungsleitung |
| 28 | Arbeitsausgang |
| 30 | drittes 2/2-Wegemagnetventil |
| 32 | Feststellbremssignalanschluss |
| 34 | Signalleitung |
| 36 | Feststellbremssignalgeber |
| 38 | Arbeitsleitung |
| 40 | Anschluss für Federspeicherbremszylinder |
| 42 | Steuerkammer |
| 44 | Gehäuse |
| 46 | Relaiskolben |
| 48 | Ventilkörper |
| 50 | Auslasssitz |
| 52 | zweiter Ventilkolben |
| 54 | Einlasssitz |
| 56 | Entlüftung |
| 58 | Arbeitskammer |
| 60 | Vorratskammer |
| 62 | Ventilkolbenfeder |
| 64 | Relaiskolbenfeder |
| 66 | Anschluss für Anhängersteuerventil |
| 68 | zweite Magnetventileinrichtung |
| 70 | Wechselventil |
| 72 a/b | Ventil |
| 73 | elektrische Energiequelle |
| 74 | dritte Ventileinrichtung |
| 75 | Schalter |
| 78 | 1. Einlass |
| 80 | 2. Einlass |
| 82 | Auslass |
| 84 | Drucksenke |
| 86 | Betätigungsorgan |
| 88 | erster Drucksensor |
| 90 | zweiter Drucksensor |
| 92 | Baueinheit |
| 94 | Anschluss |
| 96 | Gehäuse |
| 98 | Anschluss |
| 100 | Signalleitung |
| 102 | vierte Magnetventileinrichtung |
| 104 | viertes 2/2-Wegemagnetventil |
| 106 | fünftes 2/2-Wegemagnetventil |
| 108 | Drucksenke |

**Patentansprüche**

1. Elektropneumatische Bremssteuereinrichtung (1) zur Steuerung einer wenigstens einen Federspeicherbremszylinder beinhaltenden Feststellbremse, mit

a) einem Anschluss (40) für den wenigstens einen Federspeicherbremszylinder,

b) einer mittels einer elektronischen Steuereinrichtung (14) steuerbaren ersten Magnetventileinrichtung (8)

b) einem Relaisventil (18), dessen pneumatischer Steuereingang (20) einerseits mit der ersten Magnetventileinrichtung (8) und andererseits mit dem Anschluss (40) für den wenigstens einen Federspeicherbremszylinder und dessen Arbeitsausgang (28) mit dem Anschluss (40) für den wenigstens einen Federspeicherbremszylinder verbunden ist,

c) einem mit der elektronischen Steuereinrichtung (14) verbundenen elektrischen Feststellbremssignalanschluss (32) für einen elektrischen Feststellbremssignalgeber (36), über welchen Feststellbremssignale in die Steuereinrichtung (14) einsteuerbar sind,

d) einem über ein Rückschlagventil (4) abgesicherten Vorratsanschluss (2) für wenigstens einen Druckluftvorrat, welcher einerseits mit der ersten Magnetventileinrichtung (8) und andererseits mit einem Vorratseingang (16) des Relaisventils (18) verbunden ist, **dadurch gekennzeichnet, dass**

e) die erste Magnetventileinrichtung (8) durch drei 2/2-Wegemagnetventile (10, 12, 30) mit jeweils einer Sperrstellung und einer Durchlassstellung gebildet wird, wobei

f) ein erstes 2/2-Wegemagnetventil (10) als Einlassventil zwischen den Steuereingang (20) des Relaisventils (18) und den Vorratsanschluss (2) und ein zweites 2/2-Wegemagnetventil (12) zwischen den Steuereingang (20) des Relaisventils (18) und eine Drucksenke (24) und ein drittes 2/2-Wegemagnetventil (30) zwischen den Arbeitsausgang (28) und den Steuereingang (20) des Relaisventils (18) geschaltet ist.

2. Elektropneumatische Bremssteuereinrichtung nach Anspruch 1, **dadurch gekennzeichnet, dass** das erste 2/2-Wegemagnetventil (10) und das zweite 2/2-Wegemagnetventil (12) jeweils eine stromlose Sperrstellung und eine bestromte Durchlassstellung und das dritte 2/2-Wegemagnetventil (30) eine stromlose Durchlassstellung und eine bestromte Sperrstellung besitzen.

3. Elektropneumatische Bremssteuereinrichtung nach einem der vorhergehenden Ansprüche, **dadurch gekennzeichnet, dass** bei einem Einsteuern eines einen Zustand "Fahren" repräsentierenden Feststellbremssignals in den Feststellbremssignalanschluss (32) die elektronische Steuereinrichtung (14) das zweite 2/2-Wegemagnetventil (12) in Sperrstellung und zunächst das erste 2/2-Wegemagnetventil (10) in Durchlassstellung und das dritte 2/2-Wegemagnetventil (30) in Sperrstellung und dann das erste 2/2-Wegemagnetventil (10) in Sperrstellung und das dritte 2/2-Wegemagnetventil (30) in Durchlassstellung steuert.

4. Elektropneumatische Bremssteuereinrichtung nach einem der vorhergehenden Ansprüche, **dadurch gekennzeichnet, dass** bei einem Anstehen eines einen Zustand "Feststellbremse mit bestimmtem Bremsdruckwert betätigen" repräsentierenden Feststellbremssignals an dem Feststellbremssignalanschluss (32) die elektronische Steuereinrichtung (14) das dritte 2/2-Wegemagnetventil (30) in Sperrstellung schaltet und abhängig von dem Bremsdruckwert das erste 2/2-Wegemagnetventil (10) und/oder das zweite 2/2-Wegemagnetventil (12) in Sperrstellung oder in Durchlassstellung steuert.

5. Elektropneumatische Bremssteuereinrichtung nach Anspruch 4, **dadurch gekennzeichnet, dass** die elektronische Steuereinrichtung (14) das erste 2/2-Wegemagnetventil (10) und/oder das zweite 2/2-Wegemagnetventil (12) wechselweise oder gepulst in Sperrstellung und in Durchlassstellung steuert.

6. Elektropneumatische Bremssteuereinrichtung nach einem der vorhergehenden Ansprüche, **dadurch gekennzeichnet, dass** bei einem Einsteuern eines einen Zustand "Feststellbremsen" repräsentierenden Feststellbremssignals in den Feststellbremssignalanschluss (32) die elektronische Steuereinrichtung (14) das erste 2/2-Wegemagnetventil (10) in Sperrstellung und zunächst das zweite 2/2-Wegemagnetventil (12) in Durchlassstellung und das dritte 2/2-Wegemagnetventil (30) in Sperrstellung und dann das zweite 2/2-Wegemagnetventil (12) in Sperrstellung und das dritte 2/2-Wegemagnetventil (30) in Durchlassstellung steuert.

7. Elektropneumatische Bremssteuereinrichtung nach einem der vorhergehenden Ansprüche, **dadurch gekennzeichnet, dass** sie für eine Zugfahrzeug-Anhängerkombination vorgesehen ist und einen Anschluss (66) für ein Anhängersteuerventil aufweist, welcher mit dem Anschluss (40) für den wenigstens einen Federspeicherbremszylinder verbindbar ist.

8. Elektropneumatische Bremssteuereinrichtung nach Anspruch 7, **dadurch gekennzeichnet, dass** eine zweite, von der elektronischen Steuereinrichtung (8) steuerbare Magnetventileinrichtung (68) vorgesehen ist, welche ausgebildet ist, dass sie entweder den Vorratsanschluss (2) mit dem Anschluss (66) für das Anhängersteuerventil oder den Arbeitsausgang (28) des Relaisventils (18) mit dem Anschluss (66) für das Anhängersteuerventil verbindet.

9. Elektropneumatische Bremssteuereinrichtung nach Anspruch 8, **dadurch gekennzeichnet, dass** die zweite Magnetventileinrichtung (68) durch ein einziges 3/2-Wegemagnetventil oder zwei 2/2-Wegemagnetventile gebildet wird.

10. Elektropneumatische Bremssteuereinrichtung nach Anspruch 8 oder 9, **dadurch gekennzeichnet, dass** bei einem Einsteuern eines einen Zustand "Test" repräsentierenden Feststellbremssignals in den Feststellbremssignalanschluss (32) die zweite Magnetventileinrichtung (68) von der elektronischen Steuereinrichtung (14) gesteuert ist, dass sie den Vorratsanschluss (2) mit dem Anschluss (66) für das Anhängersteuerventil verbindet.

11. Elektropneumatische Bremssteuereinrichtung nach einem der Ansprüche 8 bis 10, **dadurch gekennzeichnet, dass** die zweite Magnetventileinrichtung (68) ausgebildet ist, dass sie stromlos den Vorratsanschluss (2) mit dem Anschluss (66) für das Anhängersteuerventil und bestromt den Arbeitsausgang (28) des Relaisventils (18) mit dem Anschluss (66) für das Anhängersteuerventil verbindet.

12. Elektropneumatische Bremssteuereinrichtung nach einem der Ansprüche 8 bis 11, **dadurch gekennzeichnet, dass** eine vierte Magnetventileinrichtung (102) vorgesehen ist, durch welche der von der zweiten Magnetventileinrichtung (68) an den Anschluss (66) für das Anhängersteuerventil ausgesteuerte Druck absperrbar oder weiterleitbar ist, wobei durch die vierte Magnetventileinrichtung (102) bei abgesperrtem von der zweiten Magnetventileinrichtung (68) ausgesteuertem Druck der im Anhängersteuerventil anstehende Druck in Bezug auf eine Drucksenke (108) absperrbar oder in diese Drucksenke (108) weiter leitbar ist.

13. Elektropneumatische Bremssteuereinrichtung nach einem der vorhergehenden Ansprüche, **dadurch gekennzeichnet, dass** eine dritte Ventileinrichtung (74) vorgesehen ist, mit wenigstens einem manuell oder elektrisch steuerbaren Ventil (72a, 72b) und einem Wechselventil (70), welches den kleineren von an seinen Einlässen (78, 80) anstehenden Drücken an einen Auslass (82) weiter steuert, wobei das wenigstens eine Ventil (72a, 72b) ausgebildet ist, dass es entweder den Vorratsanschluss (2) oder eine Drucksenke (84) mit einem ersten Einlass (78) des Wechselventils (70) verbindet, dessen zweiter Einlass (80) mit dem Anschluss (40) für den wenigstens einen Federspeicherbremszylinder und dessen Auslass (82) mit dem Steuereingang (20) des Relaisventils (18) verbindbar ist.

14. Elektropneumatische Bremssteuereinrichtung nach Anspruch 13, **dadurch gekennzeichnet, dass** der zweite Einlass (80) des Wechselventils (70) direkt oder über das dritte 2/2-Wegemagnetventil (30) mit dem Anschluss (40) für den wenigstens einen Federspeicherbremszylinder und der Auslass (82) des Wechselventils (70) direkt oder über das dritte 2/2-Wegemagnetventil (30) mit dem Steuereingang (20) des Relaisventils (18) verbunden ist.

15. Elektropneumatische Bremssteuereinrichtung nach einem der vorhergehenden Ansprüche, **dadurch gekennzeichnet, dass** wenigstens ein Drucksensor (88, 90) mit dem Anschluss (40) für den wenigstens einen Federspeicherbremszylinder und/oder wenigstens ein Drucksensor (88, 90) mit dem Steuereingang (20) des Relaisventils (18) und/oder wenigstens ein Drucksensor (88, 90) mit dem Anschluss (66) für das Anhängersteuerventil verbunden ist, welcher ein einen Ist-Druck repräsentierendes Signal in die elektronische Steuereinrichtung (14) einsteuert.

16. Elektropneumatische Bremssteuereinrichtung nach Anspruch 15, **dadurch gekennzeichnet, dass** die elektronische Steuereinrichtung (14) ausgebildet ist, dass sie auf der Basis des den Ist-Druck repräsentierenden Signals und eines über den Feststellbremssignalanschluss (32) eingesteuerten, einen Wert für einen Soll-Druck repräsentierenden Signals einen Soll-Ist-Abgleich im Rahmen einer Druckregelung durchführt und/oder eine Druck-Plausibilitätsprüfung und/oder eine Ermittlung des am Vorratsanschluss (2) anstehenden Vorratsdrucks durchführt.

17. Elektropneumatische Bremssteuereinrichtung nach einem der vorhergehenden Ansprüche, **dadurch gekennzeichnet, dass** wenigstens das Relaisventil (18), die erste Magnetventileinrichtung (8), das Rückschlagventil (4), die elektronische Steuereinrichtung (14) sowie der Vorratsanschluss (2), der Anschluss (40) für den wenigstens einen Federspeicherbremszylinder und der Feststellbremssignalanschluss (32) in einer Baueinheit (92) ausgebildet sind.

18. Elektropneumatische Bremssteuereinrichtung nach einem der vorhergehenden Ansprüche, **dadurch gekennzeichnet, dass** wenigstens das Relaisventil (18), die erste Magnetventileinrichtung (8), die elektronische Steuereinrichtung (14) sowie der Vorratsanschluss (2), der Anschluss (40) für den wenigstens einen Federspeicherbremszylinder, der Anschluss (66) für das Anhängersteuerventil und der Feststellbremssignalanschluss (32) in einer Baueinheit (92) ausgebildet sind, wobei wenigstens das Rückschlagventil (4) und wenigstens ein Teil einer Rückkopplungsleitung (26) zwischen dem dritten 2/2-Wegemagnetventil (30) und dem Anschluss (40) für den wenigstens einen Federspeicherbremszylinder außerhalb der Baueinheit (92) angeordnet sind.

19. Elektropneumatische Bremssteuereinrichtung nach einem der Ansprüche 8 bis 11 und 17 oder 18, **dadurch gekennzeichnet, dass** die zweite Magnetventileinrichtung (68) außerhalb der Baueinheit (92) angeordnet ist.

20. Elektropneumatische Bremssteuereinrichtung nach einem der Ansprüche 8 bis 11 und 17 oder 18, **dadurch gekennzeichnet, dass** die zweite Magnetventileinrichtung (68) innerhalb der Baueinheit (92) angeordnet ist.

21. Elektropneumatische Bremssteuereinrichtung nach einem der Ansprüche 8 bis 11 und 17 bis 20 und nach Anspruch 16, **dadurch gekennzeichnet, dass** die vierte Magnetventileinrichtung (102) außerhalb der Baueinheit (92) angeordnet ist.

22. Elektropneumatische Bremssteuereinrichtung nach einem der Ansprüche 8 bis 11 und 17 bis 20 und nach Anspruch 16, **dadurch gekennzeichnet, dass** die vierte Magnetventileinrichtung (102) innerhalb der Baueinheit (92) angeordnet ist.

23. Bremsanlage eines Fahrzeugs, beinhaltend eine elektropneumatische Bremssteuereinrichtung (1) nach wenigstens einem der vorhergehenden Ansprüche.

**Claims**

1. Electropneumatic brake controller (1) for controlling an immobilization brake which includes at least one spring brake cylinder, comprising

   a) a connection (40) for the at least one spring brake cylinder,
   b) a solenoid valve device (8) which can be controlled by means of an electronic controller (14),
   b) a relay valve (18) of which the pneumatic control inlet (20) is connected to the first solenoid valve device (8) and to the connection (40) for the at least one spring brake cylinder and of which the working outlet (28) is connected to the connection (40) for the at least one spring brake cylinder,
   c) an electric immobilization brake signal connection (32) for an electric immobilization brake signal generator (36), which electric immobilization brake signal connection is connected to the electronic controller (14) and via which immobilization brake signals can be transmitted into the controller (14), and
   d) a supply connection (2) for at least one compressed air supply, which supply connection is secured by a check valve (4) and is connected to the first solenoid valve device (8) and to a supply inlet (16) of the relay valve (18), **characterized in that**
   e) the first solenoid valve device (8) is formed by three 2/2 way solenoid valves (10, 12, 30) each having a blocking position and a passage position, wherein
   f) a first 2/2 way solenoid valve (10) is connected as inlet valve between the control inlet (20) of the relay valve (18) and the supply connection (2), and a second 2/2 way solenoid valve (12) is arranged between the control inlet (20) of the relay valve (18) and a pressure sink (24), and a third 2/2 way solenoid valve (30) is arranged between the working outlet (28) and the control inlet (20) of the relay valve (18).

2. Electropneumatic brake controller according to Claim 1, **characterized in that** the first 2/2 way solenoid valve (10) and the second 2/2 way solenoid valve (12) each have a de-energized blocking position and an energized passage position, and the third 2/2 way solenoid valve (30) has a de-energized passage position and an energized blocking position.

3. Electropneumatic brake controller according to any one of the preceding claims, **characterized in that**, when an immobilization brake signal representing a "drive" state is transmitted into the immobilization brake signal connection (32), the electronic controller (14) controls the second 2/2 way solenoid valve (12) into the blocking position, and the first 2/2 way solenoid valve (10) firstly into the passage position, and the third 2/2 way solenoid valve (30) into the blocking position, and then controls the first 2/2 way solenoid valve (10) into the blocking position and the third 2/2 way solenoid valve (30) into the passage position.

4. Electropneumatic brake controller according to any one of the preceding claims, **characterized in that,** when an immobilization brake signal representing an "actuate immobilization brake with specific brake pressure value" state is present at the immobilization brake signal connection (32), the electronic controller (14) switches the third 2/2 way solenoid valve (30) into the blocking position and controls the first 2/2 way solenoid valve (10) and/or the second 2/2 way solenoid valve (12) into the blocking position or into the passage position depending on the brake pressure value.

5. Electropneumatic brake controller according to Claim 4, **characterized in that** the electronic controller (14) controls the first 2/2 way solenoid valve (10) and/or the second 2/2 way solenoid valve (12) in the blocking position and in the passage position alternately or in a pulsed manner.

6. Electropneumatic brake controller according to any one of the preceding claims, **characterized in that**, when an immobilization brake signal representing a "immobilization brake" state is transmitted into the immobilization brake signal connection (32), the electronic controller (14) controls the first 2/2 way solenoid valve (10) into the blocking position and firstly controls the second 2/2 way solenoid valve (12) into the passage position and the third 2/2 way solenoid valve (30) into the blocking position, and then controls the second 2/2 way solenoid valve (12) into the blocking position and the third 2/2 way solenoid valve (30) into the passage position.

7. Electropneumatic brake controller according to any one of the preceding claims, **characterized in that** it is provided for a towing vehicle and trailer combination and has a connection (66) for a trailer control valve, which can be connected to the connection (40) for the least one spring brake cylinder.

8. Electropneumatic brake controller according to Claim 7, **characterized in that** a second solenoid valve device (68) which can be controlled by the electronic controller (8) is provided and is designed such that it either connects the supply connection (2) to the connection (66) for the trailer control valve or connects the working outlet (28) of the relay valve (18) to the connection (66) for the trailer control valve.

9. Electropneumatic brake controller according to Claim 8, **characterized in that** the second solenoid valve device (68) is formed by a single 3/2 way solenoid valve or two 2/2 way solenoid valves.

10. Electropneumatic brake controller according to Claim 8 or 9, **characterized in that**, when an immobilization brake signal representing a "test" state is transmitted into the immobilization brake signal connection (32), the second solenoid valve device (68) is controlled by the electronic controller (14) such that it connects the supply connection (2) to the connection (66) for the trailer control valve.

11. Electropneumatic brake controller according to any one of Claims 8 to 10, **characterized in that** the second solenoid valve device (68) is designed such that it connects the supply connection (2) to the connection (66) for the trailer control valve in a de-energized manner and connects the working outlet (28) of the relay valve (18) to the connection (66) for the trailer control valve in an energized manner.

12. Electropneumatic brake controller according to any one of Claims 8 to 11, **characterized in that** a fourth solenoid valve device (102) is provided, by means of which the pressure modulated by the second solenoid valve device (68) at the connection (66) for the trailer control valve can be blocked or forwarded, wherein the pressure present in the trailer control valve, when the pressure modulated by the second solenoid valve device (68) is blocked, can be blocked with respect to a pressure sink (108) or can be forwarded into this pressure sink (108) by means of the fourth solenoid valve device (102).

13. Electropneumatic brake controller according to any one of the preceding claims, **characterized in that** a third valve device (74) is provided and has at least one manually or electrically controllable valve (72a, 72b) and a shuttle valve (70), which controls the smaller of the pressures present at its inlets (78, 80) at an outlet (82), wherein the at least one valve (72a, 72b) is designed such that it either connects the supply connection (2) or a pressure sink (84) to a first inlet (78) of the shuttle valve (70), of which the second inlet (80) can be connected to the connection (40) for the at least one spring brake cylinder and of which the outlet (82) can be connected to the control inlet (20) of the relay valve (18).

14. Electropneumatic brake controller according to Claim 13, **characterized in that** the second inlet (80) of the shuttle valve (70) is connected directly or via the third 2/2 way solenoid valve (30) to the connection (40) for the at least one spring brake cylinder, and the outlet (82) of the shuttle valve (70) is connected directly or via the third 2/2 way solenoid valve (30) to the control inlet (20) of the relay valve (18).

15. Electropneumatic brake controller according to any one of the preceding claims, **characterized in that** at least one pressure sensor (88, 90) is connected to the connection (40) for the at least one spring brake cylinder, and/or at least one pressure sensor (88, 90) is connected to the control inlet (20) of the relay valve (18) and/or at least one pressure sensor (88, 90) is connected to the connection (66) for the trailer control valve, which transmits a signal representing an actual pressure into the electronic controller (14).

16. Electropneumatic brake controller according to Claim 15, **characterized in that** the electronic controller (14) is designed such that, on the basis of the signal representing the actual pressure and on the basis of a signal representing a value for a target pressure and transmitted via the immobilization brake signal connection (32), it carries out a target-actual comparison in the scope of a pressure regulation and/or carries out a pressure plausibility check and/or a determination of the supply pressure present at the supply connection (2).

17. Electropneumatic brake controller according to any one of the preceding claims, **characterized in that** at least the relay valve (18), the first solenoid valve device (8), the check valve (4), the electronic controller (14) and also the supply connection (2), the connection (40) for the at least one spring brake cylinder, and the immobilization brake signal connection (32) are formed in a modular unit (92).

18. Electropneumatic brake controller according to any one of the preceding claims, **characterized in that** at least one relay valve (18), the first solenoid valve device (8), the electronic controller (14) and also the supply connection (2), the connection (40) for the at least one spring brake cylinder, the connection (66) for the trailer control valve, and the immobilization brake signal connection (32) are formed in a modular unit (92), wherein at least the check valve (4) and at least part of a feedback line (26) between the third 2/2 way solenoid valve (30) and the connection (40) for the at least one spring brake cylinder are arranged outside the modular unit (92).

19. Electropneumatic brake controller according to any one of Claims 8 to 11 and 17 or 18, **characterized in that** the second solenoid valve device (68) is arranged outside the modular unit (92).

20. Electropneumatic brake controller according to any one of Claims 8 to 11 and 17 or 18, **characterized in that** the second solenoid valve device (68) is arranged inside the modular unit (92).

21. Electropneumatic brake controller according to any one of Claims 8 to 11 and 17 to 20 and according to Claim 16, **characterized in that** the fourth solenoid valve device (102) is arranged outside the modular unit (92).

22. Electropneumatic brake controller according to any one of Claims 8 to 11 and 17 to 20 and according to Claim 16, **characterized in that** the fourth solenoid valve device (102) is arranged inside the modular unit (92).

23. Braking system of a vehicle, including an electropneumatic brake controller (1) according to at least one of the preceding claims.

**Revendications**

1. Dispositif (1) de commande électropneumatique de frein de stationnement pour commander un frein de stationnement comportant au moins un cylindre de frein à ressort accumulateur, comprenant

a) un raccord (40) pour le au moins un cylindre de frein à ressort accumulateur,
b) un premier dispositif (8) à électrovanne pouvant être commandé au moyen d'un dispositif (14) électronique de commande
b) une vanne (18) relais, dont l'entrée (20) de commande pneumatique est reliée, d'une part, au premier dispositif (8) à électrovanne et, d'autre part au raccord (40) pour le au moins un cylindre de frein à ressort accumulateur, et dont la sortie (28) de travail est reliée au au moins un cylindre de frein à ressort accumulateur,
c) une borne (32) électrique de signal de frein de stationnement reliée au dispositif (14) électronique de commande pour un transmetteur (36) électrique de signal de frein de stationnement, par lesquels des signaux de frein de stationnement peuvent être entrés dans le dispositif (14) de commande,
d) un raccord (2) de réservoir sécurisé par un clapet (4) anti-retour pour au moins un réservoir d'air comprimé, qui est relié d'une part au premier dispositif (8) à électrovanne et d'autre part à une entrée (16) de réservoir de la vanne (18) relais,
**caractérisé en ce que**

e) le premier dispositif (8) à électrovanne est formé de trois électrovannes (10, 12, 30) à 2/2 voies, ayant chacune une position d'arrêt et une position de passage, dans lequel

f) une première électrovanne (10) à 2/2 voies est montée en tant que vanne d'entrée entre l'entrée (20) de commande de la vanne (18) relais et le raccord (2) de réservoir, et une deuxième électrovanne (12) à 2/2 voies est montée entre l'entrée (20) de commande de la vanne (18) relais et un puits (24) de pression et une troisième électrovanne (30) à 2/2 voies est montée entre la sortie (28) de travail et l'entrée (20) de commande de la vanne (18) relais.

2. Dispositif électropneumatique de commande de frein de stationnement suivant la revendication 1, **caractérisé en ce que** la première électrovanne (10) à 2/2 voies et la deuxième électrovanne (12) à 2/2 voies ont chacune une position d'arrêt sans courant et une position de passage avec alimentation en courant et la troisième électrovanne (30) à une position de passage sans courant et une position d'arrêt avec alimentation en courant.

3. Dispositif électropneumatique de commande de frein de stationnement suivant l'une des revendications précédentes, **caractérisé en ce que**, lors de l'entrée d'un signal de frein de stationnement représentant un état "marche" dans la borne (32) de signal de frein de stationnement, le dispositif (14) électronique de commande met la deuxième électrovanne (12) à 2/2 voies dans la position d'arrêt et d'abord la première électrovanne (10) à 2/2 voies dans la position de passage et la troisième électrovanne (30) à 2/2 voies dans la position d'arrêt et ensuite la première électrovanne (10) à 2/2 voies dans la position d'arrêt et la troisième électrovanne (30) à 2/2 voies dans la position de passage.

4. Dispositif électropneumatique de commande de frein de stationnement suivant l'une des revendications précédentes, **caractérisé en ce que**, lorsqu'un signal de frein de stationnement représentant un état "frein de stationnement actionné à une valeur de pression de frein déterminée" est appliqué à la borne (32) de signal de frein de stationnement, le dispositif (14) électronique de commande met la troisième électrovanne (30) à 2/2 voies dans la position d'arrêt et, en fonction de la valeur de pression de frein, met la première électrovanne (10) à 2/2 voies et/ou la deuxième électrovanne (12) à 2/2 voies dans la position d'arrêt ou dans la position de passage.

5. Dispositif électropneumatique de commande de frein de stationnement suivant la revendication 4, **caractérisé en ce que** le dispositif (14) électronique de commande met la première électrovanne (10) à 2/2 voies et/ou la deuxième électrovanne (12) à 2/2 voies, en alternance ou de manière pulsée, dans la position d'arrêt et dans la position de passage.

6. Dispositif électropneumatique de commande de frein de stationnement suivant l'une des revendications précédentes, **caractérisé en ce que**, lors de l'entrée d'un signal de frein de stationnement représentant un état "freinage de stationnement" dans la borne (32) de signal de frein de stationnement, le dispositif (14) électronique de commande met la première électrovanne (10) à 2/2 voies dans la position d'arrêt et d'abord la deuxième électrovanne (12) à 2/2 voies dans la position de passage et la troisième électrovanne (30) à 2/2 voies dans la position d'arrêt et ensuite, la deuxième électrovanne (12) à 2/2 voies dans la position d'arrêt et la troisième électrovanne (30) à 2/2 voies dans la position de passage.

7. Dispositif électropneumatique de commande de frein de stationnement suivant l'une des revendications précédentes, **caractérisé en ce qu'**il est prévu pour une combinaison véhicule de traction-remorque et a un raccord (66) pour une vanne de commande de remorque, qui peut être relié au raccord (40) pour le au moins un cylindre de frein à ressort accumulateur.

8. Dispositif électropneumatique de commande de frein de stationnement suivant la revendication 7, **caractérisé en ce qu'**il est prévu un deuxième dispositif (68) à électrovanne, qui peut être commandé par le dispositif (14) électronique de commande et qui est constitué, de manière à ce qu'il relie, soit le raccord (2) de réservoir au raccord (66) pour la vanne de commande de remorque, soit la sortie (28) de travail de la vanne (18) relais, au raccord (66) pour la vanne de commande de remorque.

9. Dispositif électropneumatique de commande de frein de stationnement suivant la revendication 8, **caractérisé en ce que** le deuxième dispositif (68) à électrovanne est formé d'une électrovanne à 3/2 voies unique ou de deux électrovannes à 2/2 voies.

10. Dispositif électropneumatique de commande de frein de stationnement suivant la revendication 8 ou 9, **caractérisé en ce que**, lors de l'entrée d'un signal frein de stationnement représentant un état "test" dans la borne (32) de signal de frein de stationnement, le deuxième dispositif (68) à électrovanne est commandé par le dispositif (14) électronique de commande, de manière à ce qu'il relie le raccord (2) de réservoir au raccord (66) pour la vanne de commande de remorque.

**11.** Dispositif électropneumatique de commande de frein de stationnement suivant l'une des revendications 8 à 10, **caractérisé en ce que** le deuxième dispositif (68) à électrovanne est constitué, de manière à ce qu'il relie, sans courant, le raccord (2) de réservoir au raccord (66) pour la vanne de commande de remorque et, alimenté en courant, relie la sortie (28) de travail de la vanne (18) relais au raccord (66) pour la vanne de commande de remorque.

**12.** Dispositif électropneumatique de commande de frein de stationnement suivant l'une des revendications 8 à 11, **caractérisé en ce qu'**il est prévu un quatrième dispositif (102) à électrovanne, par lequel la pression commandée, par le deuxième dispositif (68) à électrovanne, sur le raccord (66) pour la vanne de commande de remorque, peut être bloquée ou acheminée, dans lequel à la pression bloquée par le quatrième dispositif (102) à électrovanne et produite par le deuxième dispositif (68) à électrovanne, la pression appliquée au raccord pour la vanne (66) de commande de remorque peut être bloquée par rapport à un puits (108) de pression ou être acheminée dans ce puits (108) de pression.

**13.** Dispositif électropneumatique de commande de frein de stationnement suivant l'une des revendications précédentes, **caractérisé en ce qu'**il est prévu un troisième dispositif (74) de vanne ayant au moins une vanne (72a, 72b) pouvant être commandée manuellement ou électriquement et une vanne (70) à alternance, qui achemine les pressions plus petites appliquées à ses entrées (78, 80) à une sortie (82), la au moins une vanne (72a, 72b) étant constituée de manière à relier le raccord (2) de réservoir ou un puits (84) de pression à une première entrée (78) de la vanne (70) à alternance, dont la deuxième entrée (80) peut être reliée au raccord (40) pour le au moins un cylindre de frein à ressort accumulateur et dont la sortie (82) peut être reliée à l'entrée (20) de commande de la vanne (18) relais.

**14.** Dispositif électropneumatique de commande de frein de stationnement suivant la revendication 13, **caractérisé en ce que** la deuxième entrée (80) de la vanne (70) à alternance est reliée directement, ou par l'intermédiaire de la troisième électrovanne (30) à 2/2 voies, au raccord (40) pour le au moins un cylindre de frein à ressort accumulateur et la sortie (82) de la vanne (70) à alternance est reliée directement, ou par l'intermédiaire de la troisième électrovanne (30) à 2/2 voies, à l'entrée (20) de commande de la vanne (18) relais.

**15.** Dispositif électropneumatique de commande de frein de stationnement suivant l'une des revendications précédentes, **caractérisé en ce qu'**au moins un capteur (90) de pression est relié au raccord (40) pour le au moins un cylindre de frein à ressort accumulateur et/ou au moins un capteur (90) de pression est relié à l'entrée (20) de commande de la vanne (18) relais et/ou au moins un capteur (88) de pression est relié au raccord (66) pour la vanne de commande de remorque, capteur qui entre un signal représentant la pression réelle dans le dispositif (14) électronique de commande.

**16.** Dispositif électropneumatique de commande de frein de stationnement suivant la revendication 15, **caractérisé en ce que** le dispositif (14) électronique de commande est constitué, de manière à ce qu'il effectue, sur la base du signal représentant la pression réelle et d'un signal représentant une valeur d'une pression de consigne, une égalisation consigne-réelle dans le cadre d'une régulation de pression, et/ou un contrôle de la vraisemblance de la pression et/ou une détermination de la pression de réservoir appliquée au raccord (2) de réservoir.

**17.** Dispositif électropneumatique de commande de frein de stationnement suivant l'une des revendications précédente, **caractérisé en ce qu'**au moins la vanne (18) relais, le premier dispositif (8) à électrovanne, le clapet (4) anti-retour, le dispositif (14) électronique de commande ainsi que le raccord (2) de réservoir, le raccord (40) pour le au moins un cylindre de frein à ressort accumulateur et la borne (32) de signal de frein de stationnement sont constitués en une unité (92) de construction.

**18.** Dispositif électropneumatique de commande de frein de stationnement suivant l'une des revendications précédente, **caractérisé en ce que** la au moins une vanne (18) relais, le premier dispositif (8) à électrovanne, le dispositif (14) électronique de commande ainsi que le raccord (2) de réservoir, le raccord (40) pour le au moins un cylindre de frein à ressort accumulateur, le raccord (66) pour la vanne de commande de la remorque et la borne (32) de signal de frein de stationnement sont constitués en une unité (92) de construction, au moins le clapet (4) anti-retour et au moins une partie du conduit (26) de retour étant montés entre la troisième électrovanne (30) à 2/2 voies et le raccord (40) pour le au moins un cylindre de frein à ressort accumulateur à l'extérieur de l'unité (92) de construction.

**19.** Dispositif électropneumatique de commande de frein de stationnement suivant l'une des revendications 8 à 11 et 17 ou 18, **caractérisé en ce que** le deuxième dispositif (68) à électrovanne est disposé à l'extérieur de l'unité (92) de construction.

**20.** Dispositif électropneumatique de commande de frein de stationnement suivant l'une des revendications 8 à 11 et 17 ou 18, **caractérisé en ce que** le deuxième dispositif (68) à électrovanne est disposé à l'intérieur de l'unité (92) de construction.

**21.** Dispositif électropneumatique de commande de frein de stationnement suivant l'une des revendications 8 à 11 et la revendication 16, **caractérisé en ce que** le quatrième dispositif (102) à électrovanne est disposé à l'extérieur de l'unité (92) de construction.

**22.** Dispositif électropneumatique de commande de frein de stationnement suivant l'une des revendications 8 à 11 et la revendication 16, **caractérisé en ce que** le quatrième dispositif (102) à électrovanne est disposé à l'intérieur de l'unité (92) de construction.

**23.** Système de freinage d'un véhicule, comportant un dispositif (1) électropneumatique de commande de frein de stationnement suivant au moins l'une des revendications précédentes.

FIG.1

FIG.2

FIG.3

FIG.4

FIG.5

FIG.6

FIG.7

FIG.8

FIG.9

FIG.10

FIG.11

FIG.12

FIG.13

FIG.14

FIG.15

FIG.16

FIG.17

FIG.18

FIG.19

FIG.20

FIG.21

FIG.22

FIG.23

FIG.24

FIG.25

FIG.26

FIG.27

FIG.28

FIG.29

FIG.30

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102009016983 A1
- DE 10247812 C1
- DE 102006055570 B4
- DE 102007061908 B4